# FASCICULE DE BREVET EUROPEEN

(11) **EP 1 406 956 B1**
(45) Date de publication et mention de la délivrance du brevet: **26.03.2008**
(21) Numéro de dépôt: 01907789.0
(22) Date de dépôt: 14.02.2001
(51) Int. Cl.: C08J 7/04, C09D 183/04

(54) **TRAITEMENT DE SURFACE DE MATERIAU PLASTIQUE AVEC UNE COMPOSITION ORGANIQUE A FONCTIONS REACTIVES POLYMERISABLE ET/OU RETICULABLE**
OBERFLÄCHENBEHANDLUNG EINES PLASTIKMATERIALS MIT EINER ORGANISCHEN ZUSAMMENSETZUNG MIT POLYMERISIERBAREN UND/ODER VERNETZBAREN FUNKTIONEN
SURFACE TREATMENT OF PLASTIC MATERIAL WITH AN ORGANIC POLYMERISABLE AND/OR CROSSLINKABLE COMPOSITION HAVING REACTIVE FUNCTIONS

(30) Priorité: 18.02.2000 FR 0002034
(43) Date de publication de la demande: 14.04.2004
(73) Titulaire: RHODIA CHIMIE, 92512 Boulogne Billancourt Cedex (FR)
(72) Inventeur: FRANCES, Jean-Marc, F-69330 Meyzieu (FR)
(74) Mandataire: Valentino, Cédric
(86) Numéro de dépôt international: PCT/FR2001/000425
(87) Numéro de publication internationale: WO 2001/062834

(56) Documents cités:
- DE-A- 19 900 810
- US-A- 5 484 950
- DATABASE WPI Section Ch, Week 200013 Derwent Publications Ltd., London, GB; Class A21, AN 2000-142795 XP002153263 & JP 2000 007993 A (KANSAI PAINT CO LTD), 11 janvier 2000 (2000-01-11)
- DATABASE WPI Section Ch, Week 199940 Derwent Publications Ltd., London, GB; Class A26, AN 1999-474244 XP002153264 & JP 11 199853 A (TOA GOSEI CHEM IND LTD), 27 juillet 1999 (1999-07-27)
- PATENT ABSTRACTS OF JAPAN vol. 2000, no. 03, 30 mars 2000 (2000-03-30) & JP 11 349895 A (KANSAI PAINT CO LTD), 21 décembre 1999 (1999-12-21)
- PATENT ABSTRACTS OF JAPAN vol. 1997, no. 12, 25 décembre 1997 (1997-12-25) & JP 09 208674 A (KANSAI PAINT CO LTD), 12 août 1997 (1997-08-12)

## Description

Le domaine de l'invention est celui du traitement de surface des matériaux plastiques à base de compositions réticulables et/ou polymérisables sous irradiation, en particulier sous irradiation UV et/ou par faisceau d'électrons. Plus précisément, l'invention concerne la surface de matériau plastique traitée en vue de former un revêtement tel qu'une encre, un revêtement anti-adhérent, un revêtement adhérent ou un vernis.

Les matériaux plastiques sont de plus en plus utilisés comme emballages tels que des récipients, notamment des étuis, des bouteilles et pochettes. Ces matériaux plastiques, peuvent être transparents, translucides, colorés ou opaques et sont généralement à base de polyéthylène, de polypropylène, de polystyrène et/ou de polyester.

La mise au point de traitement de surface pour revêtir les matériaux plastiques est complexe et nécessite des qualités particulières d'adhérence, de solidité, de souplesse, de résistance à la rayure, de résistance à la torsion, de résistance à l'eau et de résistance aux tâches.

A ce jour toutefois, les technologies, notamment celles de séchage thermique de systèmes souvent à base de produits véhiculés dans des solvants, ne sont pas adaptées pour traiter efficacement les surfaces plastiques et conserver, notamment au cours du temps et de leur manipulation, les qualités qui lui sont nécessaires.

JP-A-2000 007993 décrit un procédé de traitement pour améliorer la résistance aux solvants et la dureté de surfaces variées, notamment de surfaces plastiques. Le dit procédé consiste à appliquer sur la surface une composition réticulable par irradiation, la dite composition comprenant (i) de 1 à 40% en poids d'un composé contenant au moins un monomère oxétane difonctionnel, (ii) de 19-95 % en poids d'un composé de type époxycyclohexyltrialkoxysilane, (iii) de 0 à 80% en poids d'un composé trialkoxysilane de glycidylalkyle et (iv) de 0.05-20 parties en poids d'un système amorceur photocationique pour 100 parties en poids des composées (i)+(ii)+(iii).

DE-A-199 00 810 décrit une composition photo-réticulable utilisé comme revêtement de surfaces plastiques, comprenant un composé silsesquioxane photoréticulable obtenu par hydrolyse d'un composé contenant une fonction oxétane, au moins un autre composé photoréticulable contenant des fonctions époxy et silane, ainsi qu'un système amorceur cationique.

JP-A-11 349895 décrit une composition cationiquement réticulable utilisé comme revêtement de surfaces plastiques, comprenant un composé contenant une fonction oxétane, un composé à base de fonctions époxy et un système amorceur cationique, la réticulation étant obtenue par action de la lumière ou du chauffage.

La présente invention propose de pallier aux carences existantes dans le domaine du traitement de surface des matériaux plastiques. L'un des objectifs essentiels de la présente invention est donc de fournir un nouveau procédé de traitement de surface de matériaux plastiques avec une composition réticulable et/ou polymérisable par voie cationique ou par voie cationique et radicalaire qui répondent à ces attentes.

La présente invention concerne un nouveau procédé de traitement de surface de matériau plastique en vue de former un revêtement comprenant les étapes suivantes:
(1) application sur au moins l'une des surfaces du matériau plastique d'une composition avec fonctions réactives polymérisables et/ou réticulables, par voie cationique ou par voie cationique et radicalaire comprenant :
   - 1 à 99 % en poids, et de préférence 1 à 60% en poids, d'au moins une matrice **A** organique polymérisable et/ou au moins partiellement polymérisée, comprenant des (co)monomères, des (co)oligomères et/ou des (co)polymères choisis parmi ceux ayant des fonctions réactives oxétanes (fr**A**).
   - 99 à 1 % en poids, et de préférence 99 à 40% en poids, d'au moins une matrice **B** organique polymérisable et/ou au moins partiellement polymérisée, comprenant des (co)monomères, des (co)oligomères et/ou des (co)polymères choisis parmi ceux ayant des fonctions réactives (frB) époxy (α₁) et/ou acrylate (α₂) et/ou alcényl-éther (α₃) et/ou hydroxy (α₄),
   - une quantité efficace d'au moins un système amorceur **C** cationique ou cationique et radicalaire,
   - éventuellement au moins un sensibilisateur **D**,
   - et éventuellement au moins un pigment **E**;
(2) et polymérisation et/ou réticulation de la surface traitée par son exposition sous une source d'irradiation et/ou sous faisceau(x) d'électrons.

Ce nouveau type de traitement confère aux matériaux plastiques, et plus particulièrement le polypropylène, des qualités de surface adéquates en ce qui concerne l'adhérence, la solidité, la souplesse, la résistance à la rayure, la résistance à la torsion, la résistance à l'eau, la résistance aux tâches; l'absence de retrait volumique et, pour notamment les revêtements transparents obtenus, l'absence de jaunissement.

En général, l'exposition sous une source d'irradiation est réalisée sous rayonnement U.V. Plus particulièrement, on utilise un rayonnement U.V. de longueur d'onde de l'ordre de 200 à 500 nm.

La matrice **A** avec fonctions réactives oxétanes (**frA**) utilisée au sein de la composition selon le procédé de l'invention peut être à base de (co)monomères, de (co)oligomères et/ou de (co)polymères de natures très variées. A ce sujet, conviennent en particulier les (co)monomères, les (co)oligomères et/ou les (co)polymères suivants constitués d'au moins une des espèces suivantes :
**A1)** les monomères avec fonctions oxétane et alcoxy, fonctions oxétane et hydroxy, ou fonctions oxétane et alcoxysilyle de formule : 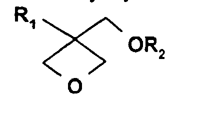 dans laquelle :
   - R₁ est (i) un atome d'hydrogène; (ii) un radical alkyle linéaire ou ramifié comprenant de 1 à 30 atomes de carbone; (iii) un radical aryle comprenant de 6 à 30 atomes de carbone éventuellement substitué par au moins un atome de fluor, un radical carboxy, un radical hydroxy, un radical ester ou un radical avec une fonction cétone; (iv) un radical cycloalkyle comprenant de 5 à 6 atomes de carbone éventuellement substitué par au moins un atome de fluor, un radical hydroxy, un radical carboxy, un radical ester ou un radical avec une fonction cétone; (v) un radical OR' où R' est un radical alkyle linéaire ou ramifié comprenant de 1 à 30 atomes de carbone; ou (vi) un radical alcényle comprenant de 2 à 12 atomes de carbone.
   - R₂ est (i) un atome d'hydrogène; (ii) un radical alcényle comprenant de 2 à 12 atomes de carbone (par exemple un radical vinyle; un radical propényle); (iii) un radical alkyle linéaire ou ramifié comprenant de 1 à 30 atomes de carbone éventuellement substitué par exemple par un groupement oxirane; (iv) un radical aryle comprenant de 6 à 30 atomes de carbone éventuellement substitué par exemple par au moins un radical alkyle comprenant de 1 à 30 atomes de carbone, un radical benzyle, un radical CF₃; un atome d'halogène, un radical hydroxy, un radical carboxy, un radical alcoxy; (v) un groupement silylé ou silylé et alkylé linéaire ou ramifié - (CₙH₂ₙ)-SiR₃R₄R₅ où n est compris entre 1 et 12, et R₃, R₄, et R₅, identiques ou différents, représentent un atome d'hydrogéne, un radical hydroxy, un radical alcoxy OR' où R' est un radical alkyle linéaire ou ramifié comprenant de 1 à 30 atomes de carbone; (vi) un radical alkyle linéaire ou ramifié comprenant de 1 à 30 atomes de carbone; (vii) un radical aryle comprenant de 6 à 30 atomes de carbone éventuellement substitué; (viii) un radical alcényle comprenant de 2 à 12 atomes de carbone; (ix) un radical acrylate; (x) un radical méthacrylate (par exemple -CO-CH=CH₂; ou (xi) un radical uréthane -CO-NH-R₁ dans lequel R₁ a la même définition que celle donnée auparavant.
**A2)** les monomères à fonctions carboxy et oxétane, ou à fonctions oxétane et alcoxysilyle de formule : 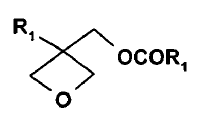 dans laquelle :
   - R₁ est de définition identique à celle donnée en A1),
   - R₂ est de définition identique à celle donnée en A1) ;
**A3)** les monomères oxétanes difonctionnels de formule : 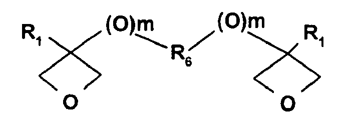 dans laquelle :
   - m, identique ou différent, est égal à 0 ou 1,
   - R₁ est de définition identique à celle donnée en A1)
   - R₆, radical divalent, est (i) un radical alkyle linéaire ou ramifié comprenant de 1 à 30 atomes de carbone; (ii) un radical aryle comprenant de 6 à 30 atomes de carbone éventuellement substitué (par au moins un radical alkyle comprenant de 1 à 30 atomes de carbone; (iii) un radical aryle comprenant de 6 à 30 atomes de carbone (par exemple un radical benzyle); (iv) un radical cycloalkyle comprenant de 5 à 30 atomes de carbone (ex: cyclohexyle); (v) un radical -CH₂-C₆H₁₀-CH₂-; (vi) un radical -CH₂-C₆H₄-CH₂-, (vii) un radical CF₃; (viii) un atome d'halogène; (ix) un radical hydroxy; (x) un radical carboxy; (xi) un radical alcoxy OR' où R' est de définition identique à celle donnée en A1); (xii) un groupement silylé =SiR₃R₄ où n est compris entre 0 et 12, et R₃, R₄, identiques ou différents, représentent un atome d'hydrogène, un radical hydroxy, un radical alcoxy OR' où R' est de définition identique à celle donnée en A1), un radical alkyle linéaire ou ramifié comprenant de 1 à 30 atomes de carbone, un radical aryle comprenant de 6 à 30 atomes de carbone éventuellement substitué, un radical -C₆H₄-C(CH₃)₂-C₆H₄-, ou un radical alcényle comprenant de 2 à 12 atomes de carbone.

A titre d'exemples d'espèces **A1,** on citera ceux de formules suivantes :

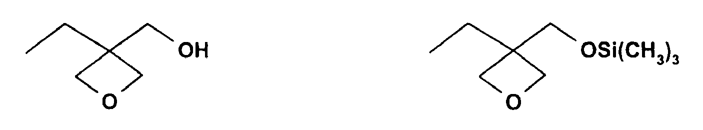

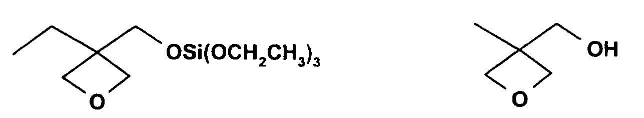

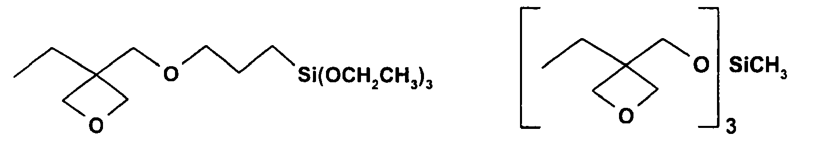

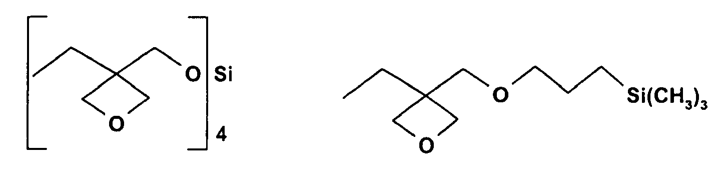

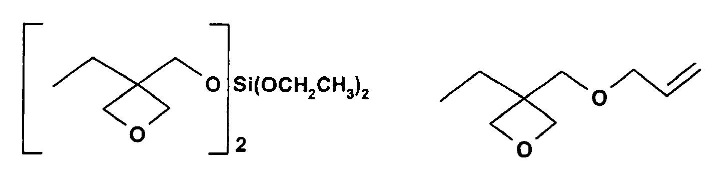

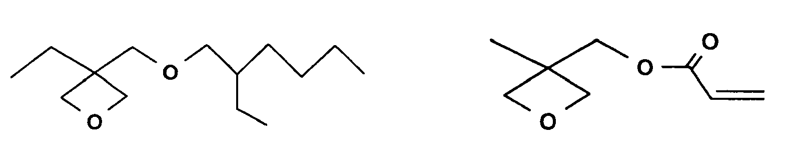

A titre d'exemples d'espèces **A2**, on citera ceux de formules suivantes :

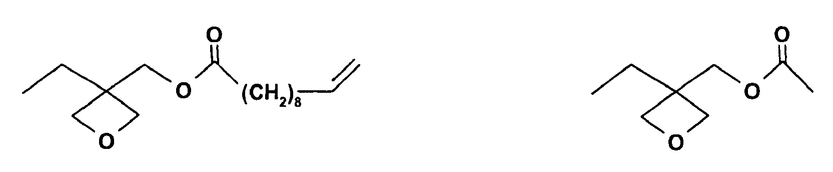

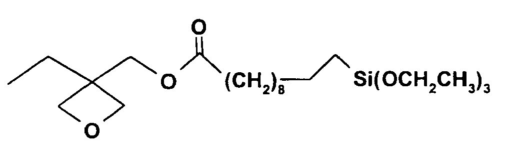

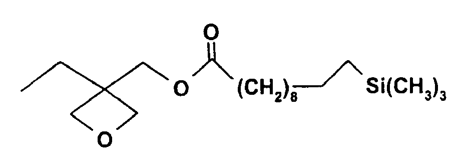

A titre d'espèces **A3**, on citera ceux de formules suivantes :

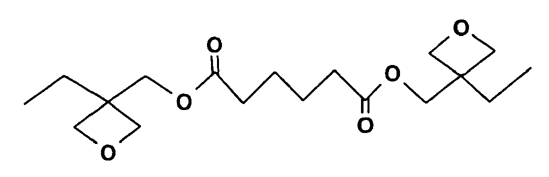

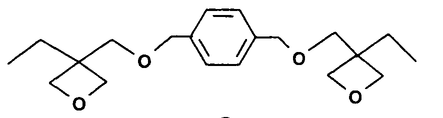

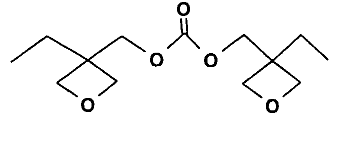

La matrice **A** contient également des polyorganosiloxanes **A4**) constitués de motifs de formule (II) et terminés par des motifs de formule (III) ou cycliques constitués de motifs de formule (II) représentées ci-dessous : 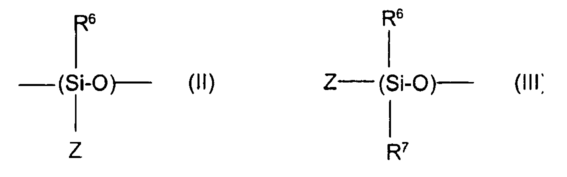 dans lesquelles :
- les symboles R⁶ et R⁷, semblables ou différents, représentent :
   · un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   · un radical cycloalkyle contenant entre 5 et 8 atomes de carbone cycliques, éventuellement substitué,
   · un radical aryle contenant entre 6 et 12 atomes de carbone pouvant être substitué, de préférence phényle ou dichlorophényle,
   · un radical aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles Z, semblables ou différents, représentent :
   · un groupement R⁶ et/ou R⁷,
   · un radical hydrogène,
   · et/ou un groupement fonctionnel oxétane réticulable relié au silicium du polyorganosiloxane par l'intermédiaire d'un radical divalent contenant de 2 à 20 atomes de carbone et pouvant contenir au moins un hétéroatome, de préférence l'oxygène, celui-ci pouvant être directement lié au silicium en formant une liaison ≡Si-OC≡.
   · avec l'un au moins des symboles Z représentant un groupement oxétane fonctionnel réticulable.

Selon une variante avantageuse de l'invention, les polyorganosiloxanes **A4** utilisés comportent de 1 à 10 groupements organofonctionnels par chaîne macromoléculaire.

Ces polyorganosiloxanes linéaires peuvent être des huiles de viscosité dynamique à 25°C, de l'ordre de 10 à 10 000 mPa.s à 25°C, généralement de l'ordre de 20 à 5 000 mPa.s à 25°C et, plus préférentiellement encore, de 20 à 600 mPa.s à 25°C, ou des gommes présentant une masse moléculaire de l'ordre de 1 000 000.

Lorsqu'il s'agit de polyorganosiloxanes cycliques, ceux-ci sont constitués de motifs (II) qui peuvent être, par exemple, du type dialkylsiloxy ou alkylarylsiloxy. Ces polyorganosiloxanes cycliques présentent une viscosité de l'ordre de 1 à 5 000 mPa.s.

Comme exemples de radical organofonctionnel du type oxétane relié au squelette du polyorganosiloxane **A4**, on peut citer le groupement de formule suivante :

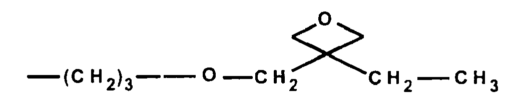

Les polyorganosiloxanes oxétane fonctionnels peuvent être préparés par hydrosilylation d'oxétanes insaturés ou condensation d'oxétanes renfermant une fonction hydroxy.

Les polyorganosiloxanes **A4** répondant le mieux à l'objet de l'invention sont décrits dans les formules ci-après. X peut représenter, un groupement alkyle, cyclohexyle ; trifluoropropyle ; perfluoroalkyle ; alcoxy ou hydroxypropyle, et R peut représenter un radical alkyle en C₁ à C₁₀, cyclohexyle, trifluoropropyle ou perfluoroalkyle en C₁ à C₁₀ et (0≤a≤1000) ; (1≤b≤1000) :

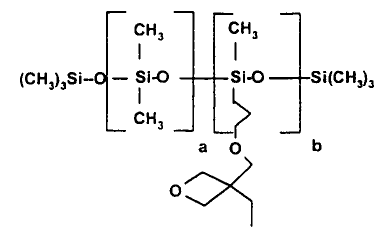

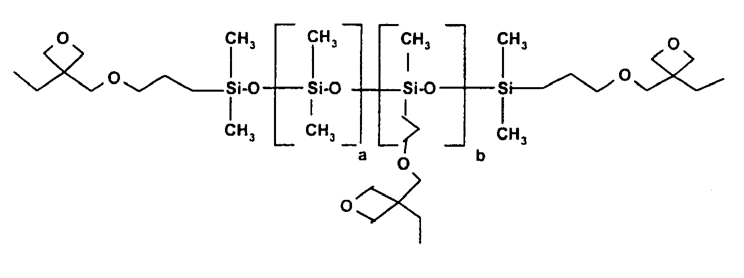

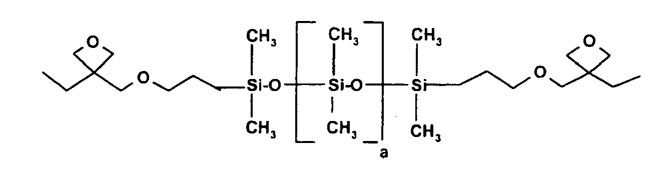

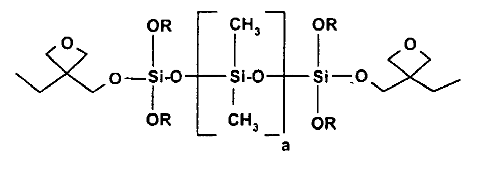

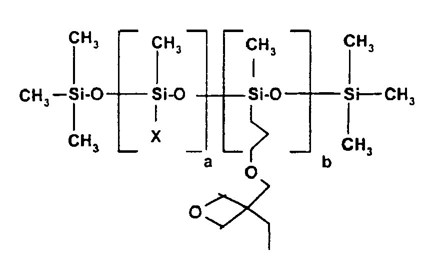

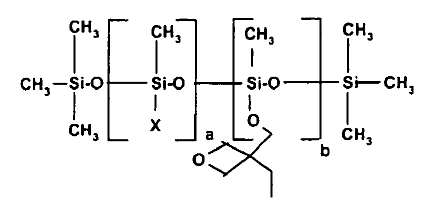

Concernant la matrice **B**, celle-ci peut comprendre notamment au moins l'une des espèces organiques **B1** suivantes :
α**_{1.1)}** les époxydes cycloaliphatiques et notamment :
   - les époxydes du type 3,4-époxycyclohexylméthyl-3',4'-époxycyclohexane carboxylate : 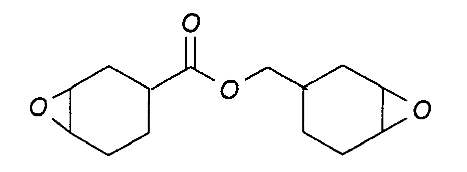
   - ou Bis(3,4-époxycyclohexyl)adipate;
α**_{1.2)}** les époxydes non cycloaliphatiques, et notamment :
   - les époxydes du type de ceux résultant de la condensation de Bis-phénol ***A*** et d'épichlorhydrine et du type :
      - di et triglycidyléthers de Bisphénol ***A*** alcoxylé de 1,6 hexane diol, de glycérol, de néopentylglycol et de propane triméthylol,
      - ou diglycidyléthers de Bisphénol ***A***,
   - les époxydes d'alpha-oléfines, époxydes NOVOLAC, huile de soja époxydé, huile de lin époxydé, et polybutadiène époxydé,
α_{**2**)} les acrylates, et notamment :
   - les acrylates époxydés, de préférence l'oligomère de Bisphénol **A-**époxydiacrylate (EBECRYL 600),
   - les acrylo-glycéro-polyester, de préférence mélange d'oligomère d'acrylate trifonctionnel obtenu à partir de glycérol et de polyester (EBECRYL 810),
   - les acrylates multifonctionnels, de préférence pentaérythritol triacrylate (PETA), triméthylol propane triacrylate (TMPTA), 1,6-hexanediol diacrylate (HDODA), triméthylolpropane éthoxylate triacrylate, thiodiéthylèneglycol diacrylate, tétra éthylène glycol diacrylate (TTEGDA), tripropylène-glycol diacrylate (TRPGDA), triéthylène-glycol diacrylate (TREGDA), triméthylpropane triméthacrylate (TMPTMA), dipentaérythritol pentaacrylate, pentaérythritol tétraacrylate éthoxylé,
   - les acrylo-uréthanes,
   - les acrylo-polyéthers,
   - les acrylo-polyesters,
   - les polyesters insaturés,
   - les acrylo-acryliques,
α**₃**) les alcényl-éthers, linéaires ou cycliques, et notamment :
   - les vinyl-éthers, en particulier le dodécylvinyléther (DDVE), le cyclohexylvinyléther (CVE), le butanediol divinyléther (BDVE), le butanediol monovinyléther (HBVE), le cyclohexane diméthanol divinyléther (CHDVE), le cyclohexane diméthanol monovinyléther (CHMVE), le triéthylèneglycol divinyléther (DVE-3) et les vinyléthers de formule : 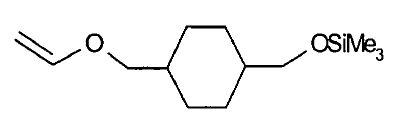 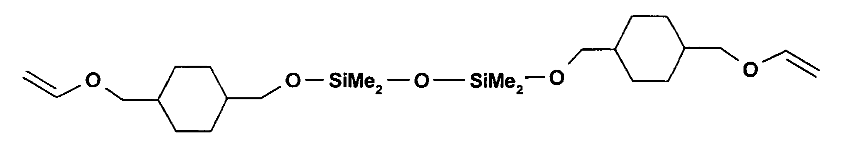
   - les propényl-éthers,
   - et les butényl-éthers ;
α**₄**) les polyols, et de préférence le composé de formule :

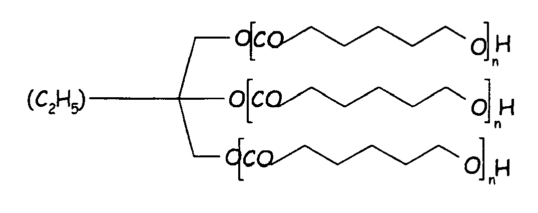

Outre des espèces organiques **B1,** la matrice **B** peut contenir aussi des monomère(s), des (co)oligomère(s) et/ou (co)polymère(s), de nature polyorganosiloxane **B2,** constitués de motifs de formule (IV) et terminés par des motifs de formule (V) ou cycliques constitués de motifs de formule (IV) représentées ci-dessous : 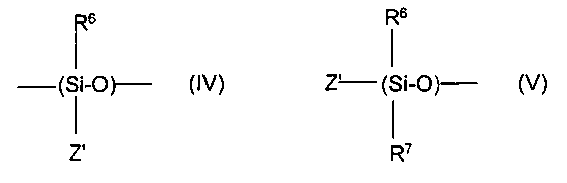 dans lesquelles :
- les symboles R⁶ et R⁷, semblables ou différents, sont de définitions identiques à celles données pour **A4 ,**
- les symboles Z', semblables ou différents, représentent :
   un groupement R⁶ et/ou R⁷,
   · un radical hydrogène,
   · et/ou un groupement organofonctionnel réticulable, de préférence un groupement époxyfonctionnel, dioxolanefonctionnel et/ou alcénylétherfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
   avec l'un au moins des symboles Z' représentant un groupement organique fonctionnel réticulable.

Selon une variante avantageuse de l'invention, les polyorganosiloxanes **B2** utilisés comportent de 1 à 10 groupements organofonctionnels (fr**B**) par chaîne macromoléculaire. Pour un groupement époxyfonctionnel cela correspond à des taux d'époxyde variant de 20 à 2000 meq. molaire/100 g de polyorganosiloxane.

Les polyorganosiloxanes **B2** linéaires peuvent être des huiles de viscosité dynamique à 25°C, de l'ordre de 10 à 10 000 mPa.s à 25°C, généralement de l'ordre de 20 à 5 000 mPa.s à 25°C et, plus préférentiellement encore, de 20 à 600 mPa.s à 25°C, ou des gommes présentant une masse moléculaire de l'ordre de 1 000 000.

Lorsqu'il s'agit de polyorganosiloxanes **B2** cycliques, ceux-ci sont constitués de motifs (IV) qui peuvent être, par exemple, du type dialkylsiloxy ou alkylarylsiloxy. Ces polyorganosiloxanes cycliques présentent une viscosité de l'ordre de 1 à 5 000 mPa.s.

Comme exemples de groupements organofonctionnels (fr**B**) du type époxy relié au squelette polyorganosiloxane **B2,** on peut citer ceux de formules suivantes :

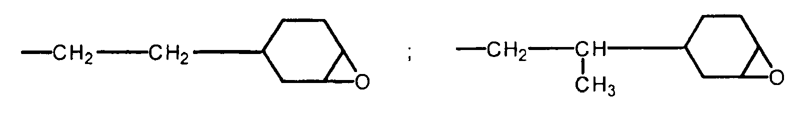

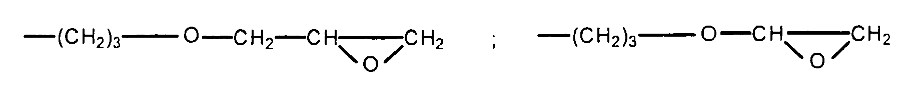

S'agissant des groupements organofonctionnels (fr**B**) du type alcényléther relié au squelette polyorganosiloxane **B2**, on peut mentionner ceux contenus dans les formules suivantes :

O)ₙ,-(CH₂)_{n"}-O-CH=CH₂

-(O)_{n'}-(CH₂)_{n"}-R⁸-O-CH=CH₂

-(O)_{n'}-(CH₂)_{n"}-O-CH=CH-R⁹

dans lesquelles :
- n' représente 0 ou 1 et n" un entier compris entre 1 et 5
- R⁸ représente :
   - un radical alkylène linéaire, ramifié ou cyclique en C₁-C₁₂, éventuellement substitué,
   - ou un radical arylène en C₅-C₁₂, de préférence phénylène, éventuellement substitué, de préférence par un à trois groupements alkyles en C₁-C₆,
- R⁹ représente un radical alkyle linéaire ou ramifié en C₁-C₆.

S'agissant des groupements dioxolane organofonctionnels (fr**B**) alcényléther relié au squelette polyorganosiloxane **B2**, on peut citer ceux contenus dans les formules suivantes :

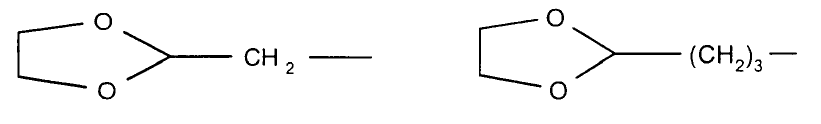

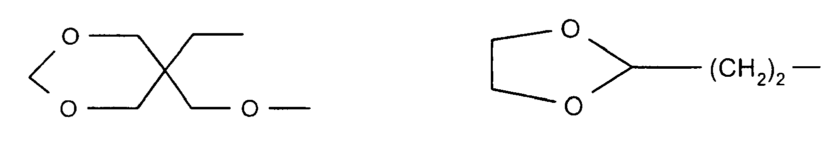

Les polyorganosiloxanes **B2** avec fonctions (fr**B**) époxy, dioxolane ou alcényléther se présentent généralement sous forme de fluides présentant une viscosité à 25°C de 10 à 10.000 mm²/s et de préférence de 20 à 600 mm²/s.

La viscosité dynamique à 25°C, de toutes les silicones considérées dans la présente description, peut être mesurée à l'aide d'un viscosimètre BROOKFIELD, selon la norme AFNOR NFT 76 102 de février 1972.

Les polyorganosiloxanes **B2** alcénylétherfonctionnels peuvent être préparés par réaction d'hydrosilylation entre des huiles à motifs Si-H et des composés vinyloxyfonctionnels tels que l'allylvinylether, l'allylvinyloxyethoxybenzène.

Les polyorganosiloxanes **B2** époxy fonctionnels peuvent être préparés par réaction d'hydrosilylation entre des huiles à motifs Si-H et des composés époxyfonctionnels tels que vinyl-4 cyclohexeneoxyde, allylglycidyléther...

Les polyorganosiloxanes **B2** dioxolane fonctionnels peuvent être préparés par hydrosilylation de dioxolanes insaturés.

Les polyorganosiloxanes **B2** répondant le mieux à l'objet de l'invention sont décrits dans les formules ci-après et possèdent au moins un groupement époxyde, alcényléther ou oxétane. X peut représenter, un groupement alkyle, cyclohexyle, trifluoropropyle, perfluoroalkyle, alcoxy ou hydroxypropyle, R peut représenter un radical alkyle en C₁ à C₁₀, cyclohexyle, trifluoropropyle ou perfluoroalkyle en C₁ à C₁₀ et (0≤a≤1000) ; (1≤b≤1000).

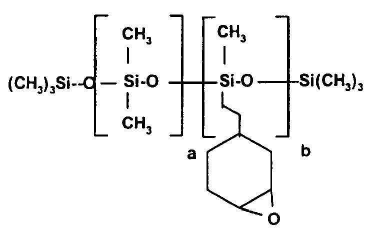

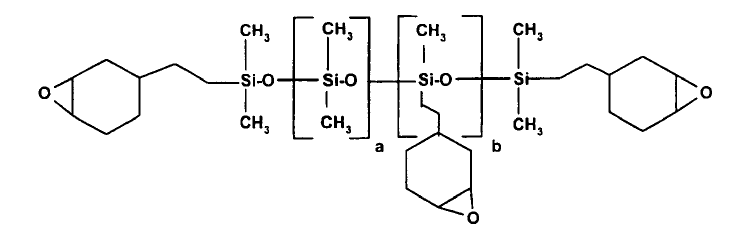

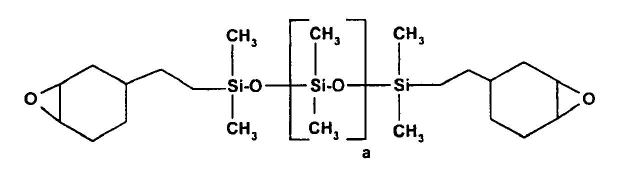

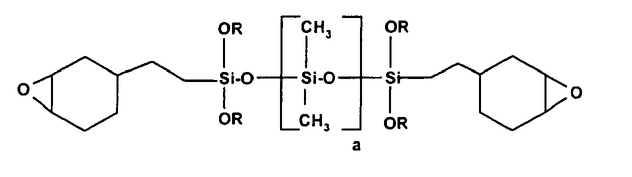

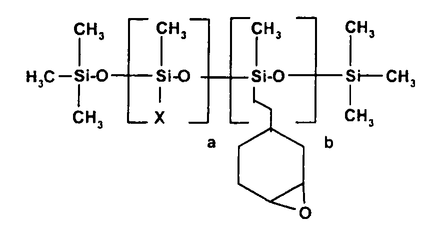

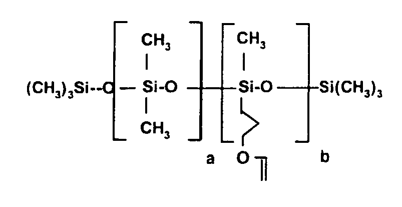

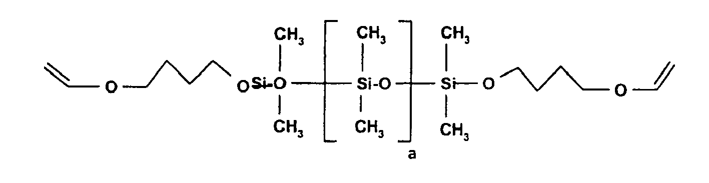

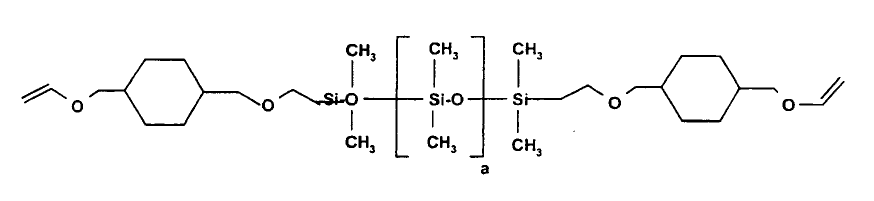

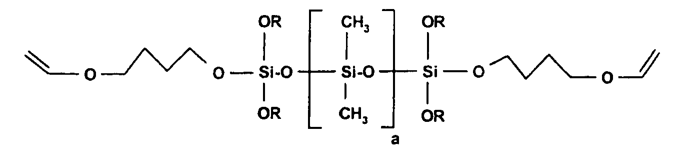

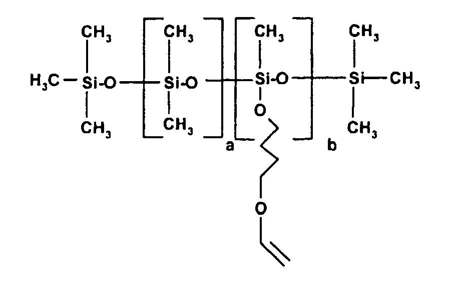

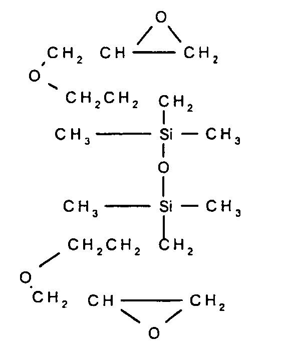

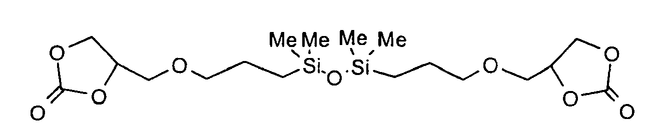

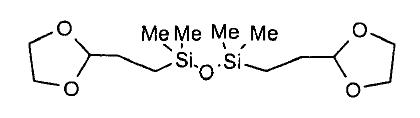

L'initiation de l'étape de polymérisation et/ou réticulation selon l'invention est effectuée grâce à la présence du système amorceur **C** qui est soit cationique ou soit cationique et radicalaire.

Les amorceurs cationiques peuvent être choisis parmi les borates d'onium (pris à eux seuls ou en mélange entre eux) d'un élément des groupes 15 à 17 de la classification périodique [Chem. & Eng. News, vol.63, N° 5, 26 du 4 février 1985] ou d'un complexe organométallique d'un élément des groupes 4 à 10 de la classification périodique [même référence].
L'entité cationique de l'amorceur cationique est sélectionnée parmi au moins l'une des espèces suivantes:
**1)** les sels d'onium de formule (**VI**) :

   [(R¹⁰)ₙ - A - (R¹¹)ₘ]⁺ (VI)

   dans laquelle :
   - A représente un élément des groupes 15 à 17 tel que par exemple : I, S, Se, P ou N,
   - R¹⁰ représente un radical aryle carbocyclique ou hétérocyclique en C₆-C₂₀, ledit radical hétérocyclique pouvant contenir comme hétéroéléments de l'azote ou du soufre,
   - R¹¹ représente R¹⁰ ou un radical alkyle ou alkényle linéaire ou ramifié en C₁-C₃₀ ; lesdits radicaux R¹⁰ et R¹¹ étant éventuellement substitués par un groupement alcoxy en C₁-C₂₅, alkyle en C₁-C₂₅, nitro, chloro, bromo, cyano, carboxy, ester ou mercapto,
   - n est un nombre entier allant de 1 à v + 1, v étant la valence de l'élément A,
   - m est un nombre entier allant de 0 à v - 1 avec n + m = v + 1,
**2)** les sels d'oxoisothiochromanium décrits dans la demande de brevet WO 90/11303, notamment le sel de sulfonium du 2-éthyl-4-oxoisothiochromanium ou de 2-dodécyl-4-oxoisothio-chromanium,
**3)** les sels de sulfonium dans lesquels l'entité cationique comprend :
   ***3₁** au moins une espèce polysulfonium de formule VIII.1 : 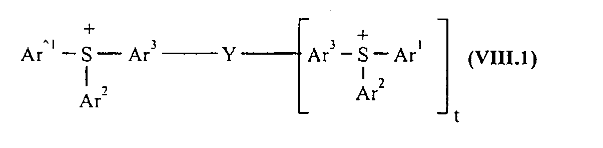 dans laquelle :
      - les symboles Ar¹, identiques ou différents, représentent chacun un radical monovalent aromatique (par exemple: phényle ou naphtyle) éventuellement substitué avec un ou plusieurs radicaux choisis parmi : (i) un radical alkyle linéaire ou ramifié en C₁-C₁₂, de préférence en C₁-C₆, (ii) un radical alkoxy linéaire ou ramifié en C₁-C₁₂ éventuellement substitué par un groupe -OH, de préférence en C₁-C₆, (iii) un atome d'halogène, (iv) un groupe -OH, (v) un groupe -COOH, (vi) un groupe ester -COO-alkyle où la partie alkyle est un reste linéaire ou ramifié en C₁ - C₁₂, de préférence en C₁-C₆, et (vii) un groupement de formule -Y⁴-Ar² où les symboles Y⁴ et Ar² ont les significations données juste ci-après,
      - les symboles Ar², identiques ou différents, représentent chacun un radical monovalent aromatique (par exemple: phényle ou naphtyle), éventuellement substitué avec un ou plusieurs radicaux choisis parmi : (i) un radical alkyle linéaire ou ramifié en C₁-C₁₂ éventuellement substitué par un groupe -OH, de préférence en C₁-C₆, (ii) un radical alkoxy linéaire ou ramifié en C₁-C₁₂, de préférence en C₁-C₆, (iii) un atome d'halogène, (iv) un groupe -OH, (v) un groupe -COOH, (vi) un groupe ester -COO-alkyle où la partie alkyle est un reste linéaire ou ramifié en C₁-C₁₂, de préférence en C₁-C₆,
      - les symboles Ar³, identiques ou différents, représentent chacun un radical divalent phénylène ou naphtylène, éventuellement substitué avec un ou plusieurs radicaux choisis parmi : (i) un radical alkyle linéaire ou ramifié en C₁-C₁₂, de préférence en C₁-C₆, (ii) un radical alkoxy linéaire ou ramifié en C₁-C₁₂, de préférence en C₁-C₆, (iii) un atome d'halogène, (iv) un groupe - OH, (v) un groupe -COOH, (vi) un groupe ester -COO-alkyle où la partie alkyle est un reste linéaire ou ramifié en C₁-C₁₂, de préférence en C₁-C₆,
      - t est un nombre entier égal à 0 ou 1, avec les conditions supplémentaires selon lesquelles :
         + quand t = 0, le symbole Y est alors un radical monovalent Y¹ représentant le groupement de formule : 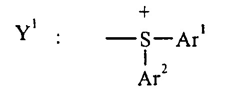 où les symboles Ar¹ et Ar² possèdent les significations données ci-avant,
         + quand t = 1 :
            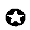 d'une part, le symbole Y est alors un radical divalent ayant les significations Y² à Y⁴ suivantes :
               - Y² : un groupement de formule : 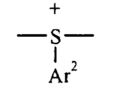 où le symbole Ar² possède les significations données ci-avant,
               - Y³ : un lien valentiel simple,
               - Y⁴ : un reste divalent choisi parmi : 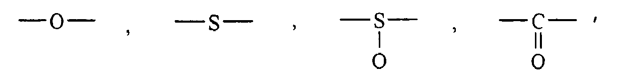 un reste alkylène linéaire ou ramifié en C₁-C₁₂, de préférence en C₁-C₆, et un reste de formule -Si(CH₃)₂O-,
            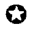 d'autre part, dans le cas uniquement où le symbole Y représente Y³ ou Y⁴, les radicaux Ar¹ et Ar² (terminaux) possèdent, outre les significations données ci-avant, la possibilité d'être reliés entre eux par le reste Y' consistant dans Y'¹ un lien valentiel simple ou dans Y'² un reste divalent choisi parmi les restes cités à propos de la définition de Y⁴, qui est installé entre les atomes de carbone, se faisant face, situés sur chaque cycle aromatique en position ortho par rapport à l'atome de carbone directement relié au cation S⁺ ;
   ***3₂** au moins une espèce monosulfonium possédant un seul centre cationique S⁺ par mole de cation et consistant dans la plupart des cas dans des espèces de formules : 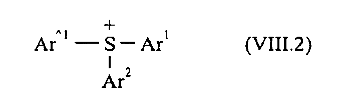 dans laquelle Ar¹ et Ar² ont les significations données ci-avant à propos de la formule (VIII.1), incluant la possibilité de relier directement entre eux un seul des radicaux Ar¹ à Ar² selon la manière indiquée ci-avant à propos de la définition de la condition supplémentaire en vigueur quand t = 1 dans la formule (II), faisant appel au reste Y' ;
   ***3₃** et/ou au moins une espèce monosulfonium possédant un seul centre cationique S⁺ par mole de cation et de formules : 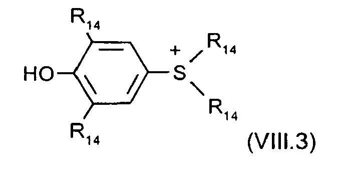 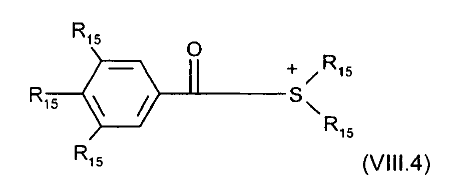 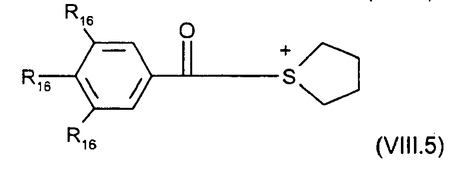 dans lesquelles R₁₄, R₁₅, et R₁₆, identiques ou différents représentent (i) un atome d'hydrogène, (ii) un atome d'halogène (par exemple: fluor), (iii) un radical alkyle linéaire ou ramifié en C₁-C₃₀ pouvant êttre substitué par au moins un halogéne (par exemple le fluor), (iv) un radical -OH, (v) un radical -O-C(=O)-R où R est un radical alkyle linéaire ou ramifié C₁-C₃₀ pouvant être substitué par au moins un halogéne (par exemple le fluor) ,(vi) un radical alkoxy OR' où R' est un radical alkyle linéaire ou ramifié C₁-C₃₀ pouvant être substitué par au moins un halogéne (par exemple le fluor).
4) Les sels de sulfoxonium S⁺=O correspondant aux sels de sulfonium 3) décrits ci-dessus au paragraphe **3**),
5) les sels organométalliques de formule (**IX**) :

   (L¹L²L³M)^{+q} **(IX)**

   formule dans laquelle :
   - M représente un métal du groupe 4 à 10, notamment du fer, manganèse, chrome, cobalt,
   - L¹ représente 1 ligand lié au métal M par des électrons π, ligand choisi parmi les ligands η³-alkyl, η⁵⁻ cyclopendadiènyl et η⁷-cycloheptratriènyl et les composés η⁶-aromatiques choisis parmi les ligands η⁶-benzène éventuellement substitués et les composés ayant de 2 à 4 cycles condensés, chaque cycle étant capable de contribuer à la couche de valence du métal M par 3 à 8 électrons π ;
   - L² représente un ligand lié au métal M par des électrons π, ligand choisi parmi les ligands η⁷-cycloheptatriènyl et les composés η⁶-aromatiques choisis parmi les ligands η⁶- benzène éventuellement substitués et les composés ayant de 2 à 4 cycles condensés, chaque cycle étant capable de contribuer à la couche de valence du métal M par 6 ou 7 électrons π ;
   - L³ représente de 0 à 3 ligands identiques ou différents liés au métal M par des électrons σ, ligand(s) choisi(s) parmi CO et NO₂⁺ ; la charge électronique totale q du complexe à laquelle contribuent L¹, L² et L³ et la charge ionique du métal M étant positive et égale à 1 ou 2.
L'entité anionique borate de l'amorceur cationique a pour formule **(X)** :

[BX"ₐ R¹²_{b}]*⁻* **(X)**

dans laquelle :
- a et b sont des nombres entiers allant pour a de 0 à 3 et pour b de 1 à 4 avec a + b = 4,
- les symboles X" représentent :
   * un atome d'halogène (chlore, fluor) avec a = 0 à 3,
   * une fonction OH avec a = 0 à 2,
- les symboles R¹², identiques ou différents, représentent :
   ▷ un radical phényle substitué par au moins un groupement électroattracteur tel que par exemple OCF₃, CF₃, NO₂, CN, et/ou par au moins 2 atomes d'halogène (fluor tout particulièrement), et ce lorsque l'entité cationique est un onium d'un élément des groupes 15 à 17,
   ▷ un radical phényle substitué par au moins un élément ou un groupement électroattracteur notamment atome d'halogène (fluor tout particulièrement), CF₃, OCF₃, NO₂, CN, et ce lorsque l'entité cationique est un complexe organométallique d'un élément des groupes 4 à 10,
   ▷ un radical aryle contenant au moins deux noyaux aromatiques tels que par exemple biphényle, naphtyle, éventuellement substitué par au moins un élément ou un groupement électroattracteur, notamment un atome d'halogène (fluor tout particulièrement), OCF₃, CF₃, NO₂, CN, quelle que soit l'entité cationique.

Selon un premier mode préférentiel, l'amorceur cationique est choisi parmi les sels d'onium d'entité cationique de formule (**VI**) et d'entité anionique de formule (**X**).

Selon un second mode préférentiel, l'amorceur cationique est choisi plus précisement parmi les sous-classes d'amorceurs ci-après décrites.

Ainsi, l'entité anionique borate est choisie préférentiellement parmi les anions de formule [BFₐR¹²_{b}]⁻ dans laquelle les symboles R¹², identiques ou différents, représentent un radical phényle substitué par au moins un groupement électro-attracteur choisi parmi OCF₃, CF₃, NO₂ et CN, et/ou par au moins deux atomes de fluor.

Plus précisement, les anions qui conviennent tout particulièrement sont les suivants :

| | | | |
|---|---|---|---|
| **1'** | [B(C₆F₅)₄]⁻ | **5'** : | [B(C₆H₃(CF₃)₂)₄]⁻ |
| **2'** : | [(C₆F₅)₂BF₂]⁻ | **6'** : | [B(C₆H₃F₂)₄]⁻ |
| **3'** | [B(C₆H₄CF₃)₄]⁻ | **7'** : | [C₆F₅BF₃]⁻ |
| **4'** | [B(C₆F₄OCF₃)₄]⁻ | | |

S'agissant de l'entité cationique de l'amorceur pouvant notamment être associée à une entité anionique borate et notamment à une entité anionique borate de formule [BFₐR¹²_{b}]⁻, on distingue cinq familles:
1) les sels d'onium de formule (VI),
2) les sels d'oxoisothiochromanium de formule (VII),
3) les sels de mono et/ou polysulfonium notamment de formules (VIII.1) à (VIII.5),
4) les sels de sulfoxonium,
5) et les sels organométalliques de formule (IX).

La première famille 1) est décrite dans de nombreux documents, notamment dans les brevets US-A-4 026 705, US-A-4 032 673, US-A-4 069 056, US-A-4 136 102, US-A-4 173 476. Parmi ceux-ci on privilégiera tout particulièrement les cations suivants :

| | |
|---|---|
| [C₈H₁₇-O-Φ-I-Φ-CH₃]⁺ | [(Φ-CH₃)₂I]⁺ |
| [C₁₂H₂₅-Φ-I-Φ-C(CH₃)₃]⁺ | [(C₈H₁₇-O-Φ)₂ I]⁺ |
| [(C₈H₁₇-O-Φ-I-Φ)]⁺ | [(CH₃Φ)₃S]⁺ |
| [(CH₃Φ)₂-S-Φ-O-C₈H₁₇]⁺ | [(CH₃-Φ-I-Φ-CH(CH₃)₂]⁺ |
| [(CH₃Φ-S-Φ-S-(ΦCH₃)₂]⁺ | [(C₁₂H₂₅-Φ)₂I]⁺ |
| [(CH₃-Φ-I-Φ-OC₂H₅]⁺ | [C₁₂H₂₅-Φ-I-Φ-CH₃]⁺ |
| et [(CH₃)₃C-Φ-\|-Φ-C(CH₃)₃]⁺ | |

S'agissant de la seconde famille 2) d'entités cationiques de formule (VII) et de type oxoisothiochromanium, elle comprend de préférence des cations correspondant à la structure D₁ qui est définie à la page 14 de la demande WO-A-90/11303 et possède la formule (VII) : 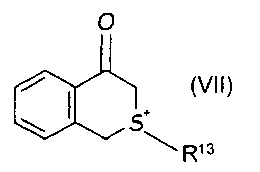 où le radical R¹³ a la signification donnée dans cette demande WO à propos du symbole R¹; une entité cationique de ce type qui est davantage préférée est celle où R¹³ représente un radical alkyle, linéaire ou ramifié, en C₁-C₂₀. Comme sels d'oxoisothiochromanium qui conviennent particulièrement bien, on citera notamment le sel de sulfonium de 2-éthyl-4-oxoisothiochromanium ou de 2-dodécyl-4-oxoisothiochromanium.

En ce qui concerne les entités cationiques sulfonium de la famille 3), on précisera que l'entité cationique comprend préférentiellement au moins une des espèces suivantes: 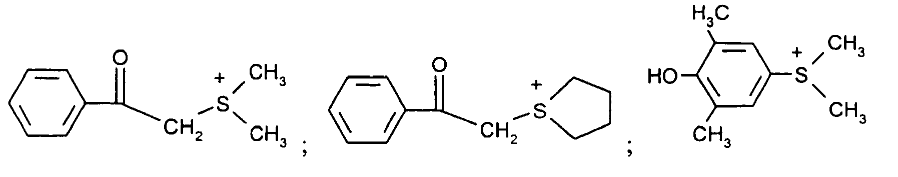 et

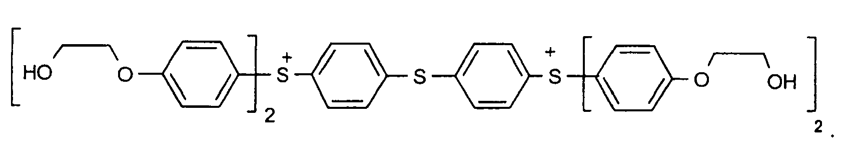

En ce qui concerne le cinquième type d'entité cationique (IX), on le trouve décrit dans le brevet US A-4 973 722, US-A-4 992 572, les demandes de brevets européens EP-A-203 829, EP-A-323 584 et EP-A-354 181. Les sels organométalliques plus volontiers retenus en pratique sont notamment :
- le (η⁵ - cyclopentadiènyle) (η⁶ - toluène) Fe⁺,
- le (η⁵ - cyclopentadiènyle) (η⁶ - méthyl-1-naphtalène) Fe⁺,
- le (η⁵- cyclopentadiènyle) (η⁶- cumène) Fe⁺,
- le bis (η⁶ - mesitylène) Fe⁺,
- le bis (η⁶ - benzène) Cr⁺.

A titre d'exemples d'amorceurs préférés du type borates d'onium, on citera les produits suivants :

| | |
|---|---|
| [C₈H₁₇-O-Φ-I-Φ-CH₃]⁺, [B(C₆F₅)₄]⁻ | (C₈H₁₇)-O-Φ-I-Φ(C₁₂H₂₅)]⁺, [B(C₆F₅)₄]⁻ |
| [C₁₂H₂₅-Φ-I-Φ(CH₃)]⁺, [B(C₆F₅)₄]⁻ | [(C₈H₁₇-O-Φ)₂I]⁺, [B(C₆F₅)₄]⁻ |
| [(C₈H₁₇)-O-Φ-I-ΦCH(CH₃)₂]⁺, [B(C₆F₅)₄]⁻ | [(CH₃Φ)₃S]⁺, [B(C₆F₅)₄]⁻ |
| [(CH₃Φ)₂S-Φ-C-C₈H₁₇]⁺, [B(C₆H₄CF₃)₄]⁻ | [(C₁₂H₂₅-(D)₂I]⁺ , [B (C₆F₅)₄]⁻ |
| [(CH₃Φ)₃S]⁺, [B(C₆H₃(m-CF₃)₂)₄]⁻ | [(Φ-CH₃)₂I]⁺, [B(C₆F₅)₄]⁻ |
| [(CH₃Φ)₃S]⁺, [B(C₆H₃(m-CF₃)₂)₄]⁻ | [CH₃-Φ-I-Φ-CH(CH₃)₂]⁺, [B(C₆F₅)₄]⁻ |
| [CH₃-Φ-I-Φ-CH(CH₃)₂]⁺, [B(C₆F₅)₄]⁻ | |

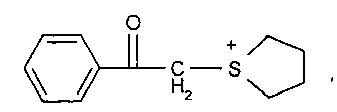

B(C₆F₅)₄ 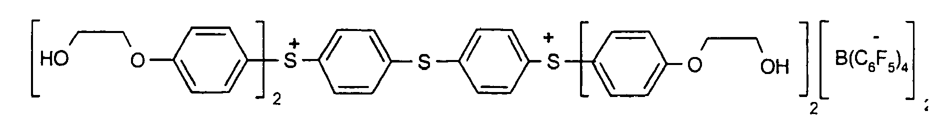 (η⁵ - cyclopentadiènyle) (η⁶ - toluène) Fe⁺, [B(C₆F₅)₄]⁻
(η⁵ - cyclopentadiènyle) (η⁶ - méthyl1-naphtalène) Fe⁺, [B(C₆F₅)₄]⁻
et (η⁵ - cyclopentadiènyle) (η⁶ - cumène) Fe⁺, [B(C₆F₅)₄]⁻

Comme autre référence littéraire pour définir les borates d'onium 1) et les borates d'oxoisothiochromanium 2) et les borates de sels organométalliques 5), sélectionnés comme amorceur dans le cadre de l'invention, on peut citer l'ensemble du contenu des demandes de brevet EP 562 897 et EP 562 922.

Comme autre exemple de sel d'onium utilisable au sein du système amorceur C, on peut citer ceux divulgués dans les brevets américains US 4 138 255 et US 4 310 469 (CRIVELLO).

On peut également utiliser d'autres amorceurs cationiques; e. g. , ceux commercialisés par UNION-CARBIDE (photo-amorceur 6990 et 6974 triarylsulfonium hexafluoro-phosphate et hexafluoroantimonate), les sels d'iodonium hexafluorophosphate ou hexafluoro-antimonate, ou les sels de ferrocénium de ces différents anions.

Les amorceurs radicalaires suceptibles d'être utilisés au sein des systèmes amorceurs **C** sont à base de benzophénones. On peut citer, à titre d'exemples, ceux commercialisés par Ciba-Geigy : Irgacure 184, Irgacure 500, Darocure 1173, Irgacure 1700, Darocure 4265, Irgacure 907, Irgacure 369, Irgacure 261, Irgacure 784 DO, Irgacure 2959 et Irgacure 651.

Les amorceurs radicalaires peuvent contenir un ou plusieurs atomes de phosphore, comme ceux commercialisés par Ciba-Geigy (Irgacure 1700) ou BASF (Lucirin TPO).

Avantageusement, le système amorceur **C** est employé en solution dans un solvant organique (accélérateur), de préférence choisi parmi les donneurs de protons et, plus préférentiellement encore, parmi les groupes suivants : alcools isopropyliques, alcools benzyliques, diacétone alcool, lactate de butyle et leurs mélanges. Le photoamorceur **C** peut également être mis en oeuvre directement par solubilisation dans la matrice **A** et/ou **B.**

Par quantité efficace de système amorceur, on entend, au sens de l'invention, la quantité suffisante pour amorcer la réticulation. Avantageusement, cette quantité efficace correspond à 1.10⁻⁶ à 1, de préférence de 1.10⁻⁵ à 1.10⁻¹ et, plus préférentiellement encore de 1.10⁻⁴ à 1.10⁻² moles de système amorceur pour 1 mole de **frA** et **frB**.

La composition de traitement selon l'invention peut comprendre également au moins un (photo)sensibilisateur **D**. En effet, pour pallier aux éventuels inconvénients liés à la structure des plastiques, à la composition de traitement selon l'invention, au type d'activation utilisé et/ou aux propriétés intrinsèques inhibitrices de certains emballages (revêtement et/ou matériau plastique épais, revêtement et/ou matériau plastique avec pigments, etc.), l'utilisation d'un (photo)sensibilisateur **D** s'avère très profitable.

A titre d'exemples, le photosensibilisateur **D** peut être sélectionné parmi les produits (poly)aromatiques - éventuellement métalliques - et les produits hétérocycliques et, de préférence, choisis dans la liste de produits suivants : phénothiazine, tétracène, pérylène, anthracène, diphényl-9-10-anthracène, thioxanthone, 2-chlorothioxanthen-9-one, 1-chloro 4 propoxy 9H-thioxanthen-9-one, isopropyl-OH-thioxanten-9-one, mélange isomères 2 et 4, 2-isopropyl-9H-thioxanthen-9-one, benzophénone, [4-(4-méthylphénylthio)phényl]phénylméthanone, 4-benzyl-4'-méthyldiphénylsulphide, acétophénone, xanthone, fluorénone, anthraquinone, 9,10-diméthylanthracène, 2-éthyl-9,10-diméthyloxyanthracène, 2,6-diméthyl-naphtalène, 2,5-diphényl-1-3-4-oxadiazole, xanthopinacol, 1,2-benzanthracène, 9-nitro-anthracène, et leurs mélanges.

Parmi les pigments E suceptibles d'être contenus au sein de la composition de traitement, on citera, par exemple, les produits suivants : dioxyde de titane, kaolin, carbonate de calcium, oxyde de fer noir, sels de baryum azotés, pigments aluminium, borosilicate de calcium, violet carbanzole, pigments azoïques, oxyde de fer rouge, oxyde de fer jaune, diazo, naphtol, noir de carbone, bayrite, dianisidine, monoarylide, pyrazolone, toluidine, calcium rouge, sels de Ca azotés, sels de Ba azotés, diarylide, monoarylide, phtalocyanine, benzimidazoline, poudre de bronze, rhodamine.

D'autres additifs peuvent aussi être utilisés. On peut mentionner, à titre d'exemples, des colorants, des charges (silicones ou non), des tensioactifs, des charges minérales de renforcement (siliceuses ou non), des bactéricides, des inhibiteurs de corrosion, des bases liantes, des composés organosiliciés ou des composés époxydés, tels que des alcoxysilanes, époxycycloaliphatiques ou époxyétheraliphatiques.

Outre les différents composants cités auparavant, les compositions du procédé de traitement selon l'invention peuvent contenir un additif de stabilisation à base d'amine aliphatique tertiaire secondaire ou primaire, et de préférence choisie parmi les dérivés décrits dans la demande de brevet WO98/07798.

### EXEMPLES.

Les exemples qui suivent permettront de mieux comprendre l'invention et de faire ressortir tous ses avantages et entrevoir quelques unes de ses variantes de réalisation.

### Exemple 1.

Une formulation témoin comprend respectivement en masse :
- 56,86% de Cyracure® 6105 (Union-Carbide),
- 11,20% de Cyracure ®TON201 (Union-Carbide),
- 30,00% de dioxyde de titane R960 ® (Dupont de Nemours),
- 01,17% d'agent d'étalement BYK 361® (BYK Chemie),
- 0,73% de Rhodorsil ® Photoinitiator 2074 (Rhodia silicones),
- et 0,04%de diéthylthioxanthone (Lambson).

### Exemple 2.

Une formulation selon l'invention comprend respectivement en masse :
- 46,71 % de Cyracure ®6105 (Union-Carbide),
- 08,10% de Cyracure ®TON201 (Union-Carbide),
- 30,00% de dioxyde de titane R 960 ® (Dupont R960),
- 13,50% de 3-Ethyl-3(hydroxyméthyl)-oxétane (Toa-Goseï),
- 0,92% d'agent d'étalement BYK 361 ® (BYK Chemie),
- 0,73% de Rhodorsil ® Photoinitiator 2074 (Rhodia silicones),
- et 0,04% de diéthylthioxanthone (Lambson).

### Tests des exemples 1 et 2.

Chaque formulation est appliquée à raison de 10g/m² sur des plaques de polypropylène transparentes de 500µm d'épaisseur posées horizontalement

La polymérisation est effectuée par irradiation à l'aide d'une lampe de la société IST Hg /Ga de 180W/cm à une vitesse de 50 m/min.

L'adhérence est évaluée par mesure de l'accrochage de la formulation polymérisée selon un test normalisé dit de quadrillage selon la norme EN ISO2409. Une valeur de 0 correspond à une adhérence parfaite et une valeur de 5 correspond à une adhérence nulle.

### Résultats des exemples 1 et 2.

La formulation polymérisée de l'exemple 1 n'adhère pas sur la plaque de polypropylène (valeur égale à 5 selon norme EN ISO2409).

Par contre, l'accrochage de la formulation polymérisée de l'exemple 2 est de très bonne qualité (valeur égale à 0 selon la norme EN ISO2409).

### Exemple 3.

Une formulation photoréticulable pour revêtement anti-adhérent renfermant un pigment bleu de phtalocyanine de type SUNFAST BLUE 15 :30 est préparée selon le mode opératoire ci-dessous.

Dans un réacteur de capacité 2 litres muni d'une agitation centrale tripale, une base pigmentaire concentrée BPC est obtenue par dispersion de 238 parties de bleu de phtalocyanine et 480 parties de silicone époxyde cycloaliphatique de formule S1 où a = 70 et b = 7:

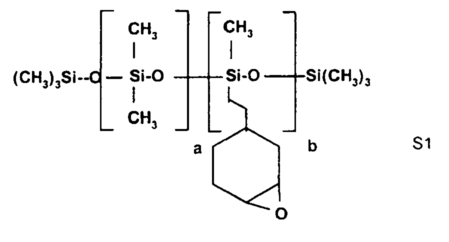

Après mélange pendant 30 minutes, la base pigmentaire concentrée BPC est broyée sur un broyeur tricylindre de façon à obtenir une dispersion de couleur bleue nuit et dont la granulométrie est inférieure à 10 µm.

Ensuite, on ajoute et mélange à 10 parties en poids de base pigmentaire concentrée :
- 190 parties de silicone S1,
- 5 parties d'éthyl-3 éthyl2hexylométhyl-3oxétane,
- 2 parties d'amorceur de- type Rhodorsil ® Photoinitiator 2074 (Rhodia silicones),
- et 1 partie de diéthyl-2thioxanthone.

### Tests et Résultats pour exemple 3.

La qualité du revêtement anti-adhérent est évaluée sur un banc UV de la société IST muni de deux lampes de 200W/cm Hg dopées au Ga sur une plaque de polypropylène (500 micromètres d'épaisseur).

La formulation est polymérisée/réticulée sur une épaisseur de deux micromètres à une vitesse de 50m/min .

L'adhérence du revêtement sur la plaque de polypropylène, évaluée par mesure de l'accrochage sur le support, est jugée excellente.

La force de décollement d'un adhésif TESA 4970 selon la norme FINAT10 est de 8g/cm.

## Revendications

1. Procédé de traitement de surface de matériau plastique comprenant les étapes suivantes:
(**1**) application sur au moins l'une des surfaces du matériau plastique d'une composition avec fonctions réactives polymérisable et/ou réticulable comprenant
• 1 à 99 % en poids, et de préférence 1 à 60% en poids, d'au moins une matrice organique **A** polymérisable et/ou au moins partiellement polymérisée, comprenant des (co)monomères, des (co)oligomères et/ou des (co)polymères constitués d'au moins une des espèces suivantes :
**A1)** les monomères avec fonctions oxétane et alcoxy, fonctions oxétane et hydroxy, ou fonctions oxétane et alcoxysilyle de formule : 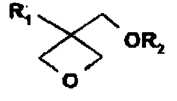 dans laquelle :
- R₁ est (i) un atome d'hydrogène; (ii) un radical alkyle linéaire ou ramifié comprenant de 1 à 30 atomes de carbone; (iii) un radical aryle comprenant de 6 à 30 atomes de carbone éventuellement substitué par au moins un atome de fluor, un radical carboxy, un radical hydroxy, un radical ester ou un radical avec une fonction cétone; (iv) un radical cycloalkyle comprenant de 5 à 6 atomes de carbone éventuellement substitué par au moins un atome de fluor, un radical hydroxy, un radical carboxy, un radical ester ou un radical avec une fonction cétone; (v) un radical OR' où R' est un radical alkyle linéaire ou ramifié comprenant de 1 à 30 atomes de carbone; ou (vi) un radical alcényle comprenant de 2 à 12 atomes de carbone.
- R₂ est (i) un atome d'hydrogène; (ii) un radical alcényle comprenant de 2 à 12 atomes de carbone (par exemple un radical vinyle un radical propényle); (iii) un radical alkyle linéaire ou ramifié comprenant de 1 à 30 atomes de carbone éventuellement substitué par exemple par un groupement oxirane; (iv) un radical aryle comprenant de 6 à 30 atomes de carbone éventuellement substitué par exemple par au moins un radical. alkyle comprenant de 1 à 30 atomes de carbone, un radical benzyle, un radical CF₃; un atome d'halogène, un radical hydroxy, un radical carboxy, un radical alcoxy; (v) un groupement silylé ou silylé et alkylé linéaire ou ramifié -(CₙH₂ₙ)-SiR₃R₄R₅ où n est compris entre 0 et 12 , et R₃, R₄, et R₅, identiques ou différents, représentent un atome d'hydrogéne, un radical hydroxy , un radical alcoxy OR' où R' est un radical alkyle linéaire ou ramifié comprenant de 1 à 30 atomes de carbone; (vi) un radical alkyle linéaire ou ramifié comprenant de 1 à 30 atomes de carbone; (vii) un radical aryle comprenant de 6 à 30 atomes de carbone éventuellement substitué; (viii) un radical alcényle comprenant de 2 à 12 atomes de carbone; (ix) un radical acrylate; (x) un radical méthacrylate (par exemple - CO-CH=CH₂)-, ou (xi) un radical uréthane -CO-NH-R₁. dans lequel R₁ a la même définition que celle donnée auparavant.
**A2**) les monomères à fonctions carboxy et oxétane, ou à fonctions oxétane et alcoxysilyle de formule : 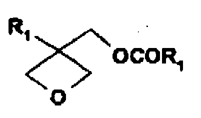 dans laquelle :
- R₁ est de définition identique à celle donnée en A1),
- R₂ est de définition identique à celle donnée en A1) :
**A3**) les monomères oxétanes difonctionnels de formule : 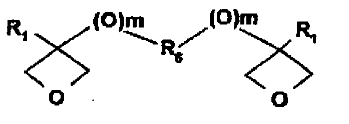 dans laquelle :
- m, identique ou différent, est égal à 0 ou 1,
- R₁ est de définition identique à celle donnée en **A1**)
- R₆, radical divalent, est (i) un radical alkyle linéaire ou ramifié comprenant de 1 à 30 atomes de carbone; (ii) un radical aryle comprenant de 6 à 30 atomes de carbone éventuellement substitué (par au moins un radical alkyle comprenant de 1 à 30 atomes de carbone; (iii) un radical aryle comprenant de 6 à 30 atomes de carbone (par exemple un radical benzyle); (iv) un radical cycloalkyle comprenant de 5 à 30 atomes de carbone (ex: cyclohexyle); (v) un radical -CH₂-C₆H₁₀-CH₂-; (vi) un radical-CH₂-C₆H₄-CH₂-, (vii) un radical CF₃; (viii) un atome d'halogène; (ix) un radical hydroxy; (x) un radical carboxy; (xi) un radical alcoxy OR' où R' est de définition identique à celle donnée en A1); (xii) un groupement silylé =SiR₃R₄ où n est compris entre 0 et 12, et R₃, R₄, identiques ou différents, représentent un atome d'hydrogène, un radical hydroxy, un radical alcoxy OR' où R' est de définition identique à celle donnée en A1), un radical alkyle linéaire ou ramifié comprenant de 1 à 30 atomes de carbone, un radical aryle comprenant de 6 à 30 atomes de carbone éventuellement substitué, un radical -C₆H₄-C(CH₃)₂-C₆H₄-, ou un radical alcényle comprenant de 2 à 12 atomes de carbone.
• 99 à 1 % en poids, et de préférence 99 à 40% en poids, d'au moins une matrice organique **B** polymérisable et/ou au moins partiellement polymérisée, comprenant des (co)monomères, des (co)oligomères et/ou des (co)polymères choisis parmi ceux ayant des fonctions réactives (frB) époxy (α₁) et/ou acrylate (α₂) et/ou alcényl-éther (α₃) et/ou hydroxy (α₄),
• une quantité efficace d'au moins un système amorceur C cationique ou cationique et radicalaire,
• éventuellement au moins un sensibilisateur **D**,
• et éventuellement au moins un pigment E,.
(**2**) et polymérisation et/ou réticulation de la surface traitée par son exposition sous une source d'irradiation et/ou sous faisceau(x) d'électrons ;
dans laquelle la matrice A organique comporte en outre des polyorganosiloxanes A4), constitués de motifs de formule (II) et terminés par des motifs de formule (III) et/ou cycliques constitués de motifs de formule (II) représentées ci-dessous : 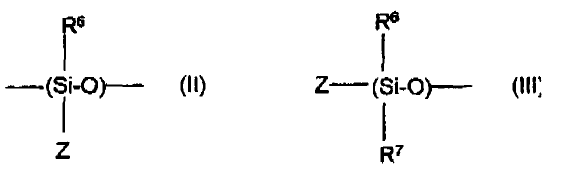 dans lesquelles :
- les symboles R⁶ et R⁷, semblables ou différents, représentent :
· un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
· un radical cycloalkyle contenant entre 5 et 8 atomes de carbone cycliques, éventuellement substitué,
· un radical aryle contenant entre 6 et 12 atomes de carbone pouvant être substitué, de préférence phényle ou dichlorophényle,
· une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles Z, semblables ou différents, représentent :
· un groupement R⁶ et/ou R⁷,
· un radical hydrogène,
· et/ou un groupement oxétanefonctionnel réticulable relié au silicium du polyorganosiloxane par l'intermédiaire d'un radical divalent contenant de 2 à 20 atomes de carbone et pouvant contenir au moins un hétéroatome, de préférence l'oxygène, celui-ci pouvant être directement lié au silicium en formant une liaison =Si-OC=.
· avec l'un au moins des symboles Z représentant un groupement fonctionnel oxétane réticulable.

2. Procédé selon la revendication 1, **caractérisé en ce que** l'amorceur C est un amorceur cationique dont l'entité anionique a pour formule (X):
[BX"ₐ R¹²_{b}]⁻ (X)
dans laquelle :
- a et b sont des nombres entiers allant pour a de 0 à 3 et pour b de 1 à 4 avec a + b = 4,
- les symboles X" représentent :
* un atome d'halogène (chlore, fluor) avec a = 0 à 3,
* une fonction OH avec a = 0 à 2,
- les symboles R¹², identiques ou différents, représentent :
▷ un radical phényle substitué par au moins un groupement électroattracteur tel que par exemple OCF₃, CF₃, NO₂, CN, et/ou par au moins 2 atomes d'halogène (fluor tout particulièrement), et ce lorsque l'entité cationique est un onium d'un élément des groupes 15 à 17,
▷ un radical phényle substitué par au moins un élément ou un groupement électroattracteur notamment atome d'halogène (fluor tout particulièrement), CF₃, OCF₃, NO₂, CN, et ce lorsque l'entité cationique est un complexe organométallique d'un élément des groupes 4 à 10,
▷ un radical aryle contenant au moins deux noyaux aromatiques tels que par exemple biphényle, naphtyle, éventuellement substitué par au moins un élément ou un groupement électroattracteur, notamment un atome d'halogène (fluor tout particulièrement), OCF₃, CF₃, NO₂, CN, quelle que soit l'entité cationique.

3. Procédé selon la revendication précédente **caractérisé en ce que** l'entité cationique de l'amorceur cationique est sélectionnée parmi les sels d'onium de formule (VI) :
[(R¹⁰)ₙ- A - (R¹¹)ₘ]⁺ (VI)
dans laquelle :
• A représente un élément des groupes 15 à 17 tel que par exemple : 1, S, Se, P ou N,
• R¹⁰ représente un radical aryle carbocyclique ou hétérocyclique en C₆-C₂₀ ledit radical hétérocyclique pouvant contenir comme hétéroéléments de l'azote ou du soufre,
• R¹¹ représente R¹⁰ ou un radical alkyle ou alkényle linéaire ou ramifié en C₁-C₃₀; lesdits radicaux R¹⁰ et R¹¹ étant éventuellement substitués par un groupement alcoxy en C₁-C₂₅, alkyle en C₁-C₂₅, nitro, chloro, bromo, cyano, carboxy, ester ou mercapto,
• n est un nombre entier allant de 1 à v + 1, v étant la valence de l'élément A,
• m est un nombre entier allant de 0 à v - 1 avec n + m = v + 1,

4. Procédé selon l'une quelconque des revendications précédentes, **caractérisé en que** la matrice **B** comprend au moins l'une des espèces organiques B1 suivantes :(α₁₎ époxydes et époxydes non cycloaliphatiques, (α₂₎ acrylates, (α ₃₎ alcényléthers, linéaires ou cycliques, et (α₄₎ et les polyols.

5. Procédé selon la revendication précédente, **caractérisé en ce que** les espèces organiques **B1** sont choisies parmi les suivantes :
α_{1.1)} les époxydes cycloaliphatiques et notamment :
- les époxydes du type 3,4-époxycyclohexylméthyl-3',4'-époxycyclohexane carboxylate : 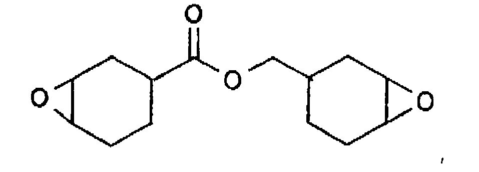
- ou Bis(3,4-époxycyclohexyl)adipate;
α_{1.2}) les époxydes non cycloaliphatiques, et notamment :
• les époxydes du type de ceux résultant de la condensation de Bis-phénol A et d'épichlomydrine et du type :
- di et triglycidyléthers de Bisphénol ***A*** alcoxylé de 1,6 hexane diol, de glycérol, de néopentylglycol et de propane triméthylol,
- ou diglycidyléthers de Bisphénol ***A***,
• les époxydes d'alpha-oléfines, époxydes NOVOLAC, huile de soja époxydé, huile de lin époxydé, et polybutadiène époxydé,
α₂) les acrylates, et notamment :
• les acrylates époxydés, de préférence l'oligomère de Bisphénol A-époxydiacrylate (EBECRYL 600),
• les acrylo-glycéro-polyester, de préférence mélange d'oligomère d'acrylate trifonctionnel obtenu à partir de glycérol et de polyester (EBECRYL 810),
• les acrylates multifonctionnels, de préférence pentaérythritol triacrylate (PETA), triméthylol propane triacrylate (TMPTA), 1,6-hexanediol diacrylate (HDODA), triméthylolpropane éthoxylate triacrylate, thiodiéthylèneglycol diacrylate, tétra éthylène glycol diacrylate (TTEGDA), tripropylène-glycol diacrytate (TRPGDA), triéthylène-glycol diacrylate (TREGDA), triméthylpropane triméthacrylate (TMPTMA),
• les acryto-uréthanes,
• les acrylo-polyéthers,
• les acrylo-polyesters,
• les polyesters insaturés,
• les acrylo-acryliques,
α₃₎ les alcényl-éthers, linéaires ou cycliques, et notamment :
• les vinyl-éthers, en particulier le dodécylvinyléther (DDVE), le cyclohexylvinyléther (CVE), le butanedioldivinyléther (BDVE), le butanediolmonovinyléther (HBVE), le cyclohexanediméthanol divinyléther (CHDVE), le cyclohexane diméthanol monovinyléther (CHMVE), le triéthylèneglycol divinyléther (DVE-3) et les vinyléthers de formules ; 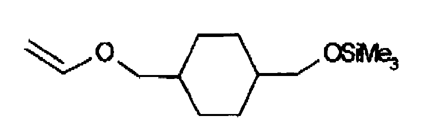 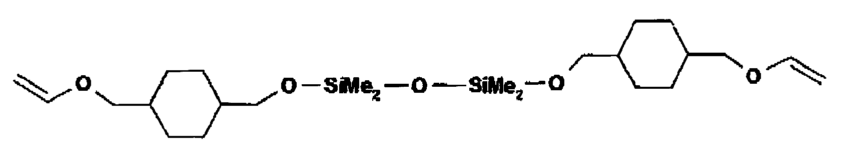
• les propényl-éthers,
• et les butényl-éthers ;
α₄₎ les polyols, et de préférence le composé de formule :

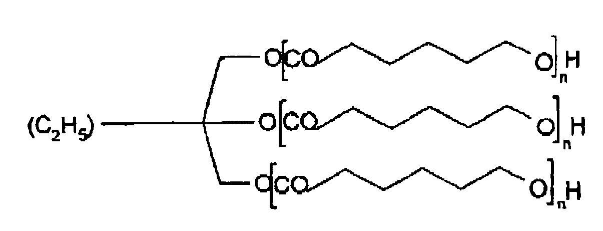

6. Procédé selon l'une quelconque des revendications précédentes, **caractérisé en ce que** la matrice organique B comprend en outre au moins un monomère(s) et/ou oligomère(s) et/ou polymère(s), de nature polyorganosiloxane B2, constitués de motifs de formule (IV) et terminés par des motifs de formule (V) ou cycliques constitués de motifs de formule (IV) représentées ci-dessous : 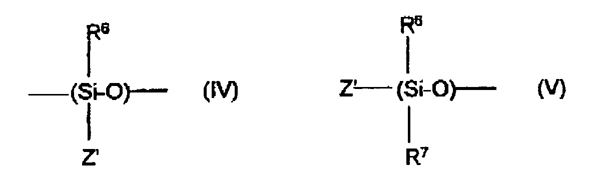 dans lesquelles :
- les symboles R⁶ et R⁷, semblables ou différents, sont de définitions identiques à celles données pour A4 ,
- les symboles Z', semblables ou différents, représentent :
• un groupement R⁶ et/ou R⁷,
• un radical hydrogène,
• et/ou un groupement organofonctionnel réticulable, de préférence un groupement époxyfonctionnel, dioxolanefonctionnel et/ou alcénylétherfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
• avec l'un au moins des symboles Z représentant un groupement organique fonctionnel réticulable.

7. Procédé selon la revendication précédente, **caractérisé en ce que** les (fr**B**) du polyorganosiloxane B sont choisis parmi les radicaux suivants : 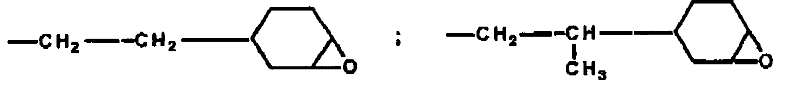 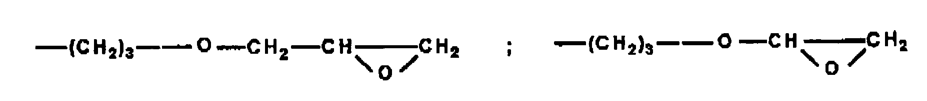 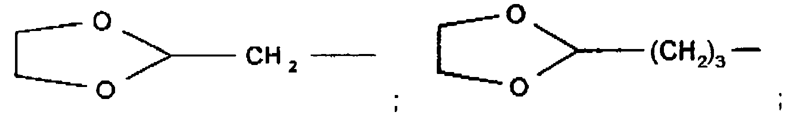 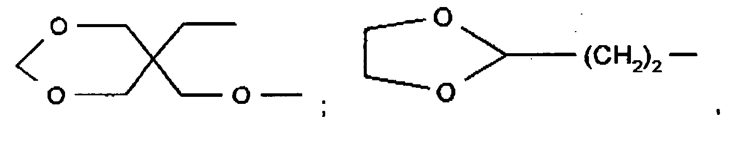 -(O)_{n'}-(CH₂)_{n"}-O-CH=CH₂, -(O)_{n'}-(CH₂)_{n"}-R⁸-O-CH=CH₂, et -(O)_{n'}-(CH₂)_{n"}-O-CH=CH-R⁹
dans lesquelles :
• n' représente 0 ou 1 et n" un entier compris entre 1 et 5
• R⁸ représente :
- un radical alkylène linéaire, ramifié ou cyclique en C₁-C₁₂, éventuellement substitué,
- ou un radical arylène en C₅-C₁₂, de préférence phénylène, éventuellement substitué, de préférence par un à trois groupements alkyles en C₁-C₆,
• et R⁹ représente un radical alkyle linéaire ou ramifié en C₁-C₆.

8. Matériau plastique traité suceptible d'être obtenu par le procédé selon l'une quelconque des revendications précédentes.

9. Matériau plastique selon la revendication précédente **caractérisé en ce que** le traitement de surface est effectué en vue de former un revêtement tel qu'une encre, un revêtement anti-adhérent, un revêtement adhérent ou un vernis.

## Claims

1. Process for the surface treatment of a plastic comprising the following stages:
(**1**) application, to at least one of the surfaces of the plastic, of a composition with reactive functional groups which can be polymerized and/or crosslinked comprising:
• 1 to 99% by weight, and preferably 1 to 60% by weight, of at least one polymerizable and/or at least partially polymerized organic matrix **A** comprising (co)monomers, (co)oligomers and/or (co)polymers composed of at least one of the following species:
**A1)** monomers with oxetane and alkoxy functional groups, oxetane and hydroxyl functional groups, or oxetane and alkoxysilyl functional groups of formula: 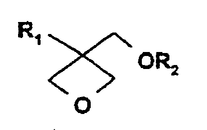 in which:
- R₁ is (i) a hydrogen atom; (ii) a linear or branched alkyl radical comprising from 1 to 30 carbon atoms; (iii) an aryl radical comprising from 6 to 30 carbon atoms, which radical is optionally substituted by at least one fluorine atom, one carboxyl radical, one hydroxyl radical, one ester radical or one radical with a ketone functional group; (iv) a cycloalkyl radical comprising from 5 to 6 carbon atoms, which radical is optionally substituted by at least one fluorine atom, one hydroxyl radical, one carboxyl radical, one ester radical or one radical with a ketone functional group; (v) an OR' radical where R' is a linear or branched alkyl radical comprising from 1 to 30 carbon atoms; or (vi) an alkenyl radical comprising from 2 to 12 carbon atoms,
- R₂ is (i) a hydrogen atom; (ii) an alkenyl radical comprising from 2 to 12 carbon atoms (for example a vinyl radical or a propenyl radical); (iii) a linear or branched alkyl radical comprising from 1 to 30 carbon atoms, which radical is optionally substituted, for example by an oxirane group; (iv) an aryl radical comprising from 6 to 30 carbon atoms, which radical is optionally substituted, for example by at least one alkyl radical comprising from 1 to 30 carbon atoms, one benzyl radical, one CF₃ radical, one halogen atom, one hydroxyl radical, one carboxyl radical or one alkoxy radical; (v) a linear or branched alkylated and silylated or silylated group -(CₙH₂ₙ)-SiR₃R₄R₅, where n is between 0 and 12 and R₃, R₄ and R₅, which are identical or different, represent a hydrogen atom, a hydroxyl radical or an alkoxy radical OR' where R' is a linear or branched alkyl radical comprising from 1 to 30 carbon atoms; (vi) a linear or branched alkyl radical comprising from 1 to 30 carbon atoms; (vii) an aryl radical comprising from 6 to 30 carbon atoms, which radical is optionally substituted; (viii) an alkenyl radical comprising from 2 to 12 carbon atoms; (ix) an acrylate radical; (x) a methacrylate radical (for example -CO-CH=CH₂); or (xi) a urethane radical -CO-NH-R₁ in which R₁ has the same definition as that given above;
**A2**) monomers comprising carboxyl and oxetane functional groups or comprising oxetane and alkoxysilyl functional groups of formula: 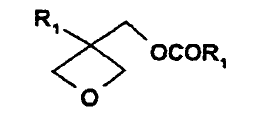 in which:
- R₁ has a definition identical to that given in **A1**),
- R₂ has a definition identical to that given in **A1**);
**A3**) difunctional oxetane monomers of formula: 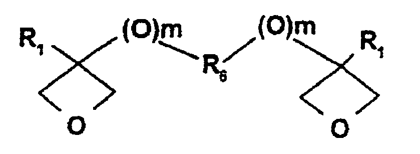 in which:
- m, which is identical or different, is equal to 0 or 1,
- R₁ has a definition identical to that given in A1) ,
- R₆, a divalent radical, is (i) a linear or branched alkyl radical comprising from 1 to 30 carbon atoms; (ii) an aryl radical comprising from 6 to 30 carbon atoms, which radical is optionally substituted (by at least one alkyl radical comprising from 1 to 30 carbon atoms; (iii) an aryl radical comprising from 6 to 30 carbon atoms (for example a benzyl radical); (iv) a cycloalkyl radical comprising from 5 to 30 carbon atoms (ex.: cyclohexyl); (v) a -CH₂-C₆H₁₀-CH₂- radical; (vi) a -CH₂-C₆H₄-CH₂-radical; (vii) a CF₃ radical; (viii) a halogen atom; (ix) a hydroxyl radical; (x) a carboxyl radical; (xi) an alkoxy radical OR' where R' has a definition identical to that given in A1); (xii) a silyl group =SiR₃R₄ where n is between 0 and 12 and R₃ and R₄, which are identical or different, represent a hydrogen atom, a hydroxyl radical, an alkoxy radical OR' where R' has a definition identical to that given in **A1),** a linear or branched alkyl radical comprising from 1 to 30 carbon atoms, an aryl radical comprising from 6 to 30 carbon atoms which is optionally substituted, a -C₆H₄-C(CH₃)₂-C₆H₄- radical or an alkenyl radical comprising from 2 to 12 carbon atoms.
• 99 to 1% by weight, and preferably 99 to 40% by weight, of at least one polymerizable and/or at least partially polymerized organic matrix **B** comprising (co)monomers, (co)oligomers and/or (co)polymers selected from those having epoxy (α₁) and/or acrylate (α₂) and/or alkenyl ether (α₃) and/or hydroxyl (α₄) reactive functional groups (**B**rf),
• an effective amount of at least one cationic or cationic and radical initiator system **C**,
• optionally at least one sensitizer **D,**
• and optionally at least one pigment **E;**
(**2**) and polymerization and/or crosslinking of the treated surface by its exposure under a source of irradiation and/or under electron beam(s);
in which
the organic matrix **A** additionally comprises polyorganosiloxanes **A4**), which are composed of units of formula (II) and are terminated by units of formula (III) and/or are cyclic and are composed of units of formula (II), which formulae are represented below: 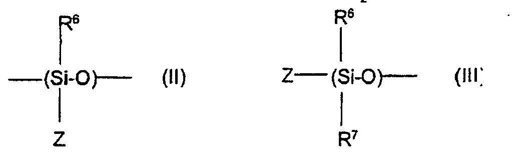 in which:
- the R⁶ and R⁷ symbols, which are alike or different, represent:
• a linear or branched alkyl radical comprising 1 to 8 carbon atoms which is optionally substituted by at least one halogen, preferably fluorine, the alkyl radicals preferably being methyl, ethyl, propyl, octyl and 3,3,3-trifluoropropyl,
• a cycloalkyl radical comprising between 5 and 8 cyclic carbon atoms, which radical is optionally substituted,
• an aryl radical comprising between 6 and 12 carbon atoms, which radical can be substituted, preferably phenyl or dichlorophenyl,
• an aralkyl part having an alkyl part comprising between 5 and 14 carbon atoms and an aryl part comprising between 6 and 12 carbon atoms, which part is optionally substituted on the aryl part by halogens, alkyls and/or alkoxyls comprising 1 to 3 carbon atoms,
- the Z symbols, which are alike or different, represent:
• an R⁶ and/or R⁷ group,
• a hydrogen radical,
• and/or a crosslinkable oxetane functional group connected to the silicon of the polyorganosiloxane via a divalent radical which comprises from 2 to 20 carbon atoms and which can comprise at least one heteroatom, preferably oxygen, it being possible for the latter to be bonded directly to the silicon, forming an ≡Si-OC≡ bond,
• with at least one of the Z symbols representing a crosslinkable oxetane functional group.

2. Process according to Claim 1, **characterized in that** the initiator **C** is a cationic initiator, the anionic entity of which has the formula (**X**) :
[BX"ₐR¹²_{b}]⁻ (**X**)
in which:
- a and b are integers ranging from 0 to 3 for a and from 1 to 4 for b, with a + b = 4,
- the X" symbols represent:
* a halogen atom (chlorine or fluorine) with a = 0 to 3,
* an OH functional group with a = 0 to 2,
- the R¹² symbols, which are identical or different, represent:
→ a phenyl radical substituted by at least one electron-withdrawing group, such as, for example, OCF₃, CF₃, NO₂ or CN, and/or by at least 2 halogen atoms (very particularly fluorine), this being when the cationic entity is an onium of an element from Groups 15 to 17,
→ a phenyl radical substituted by at least one electron-withdrawing element or group, in particular a halogen atom (very particularly fluorine), CF₃, OCF₃, NO₂ or CN, this being when the cationic entity is an organometallic complex of an element from Groups 4 to 10,
→ an aryl radical comprising at least two aromatic nuclei, such as, for example, biphenyl or naphthyl, which is optionally substituted by at least one electron-withdrawing element or group, in particular a halogen atom (very particularly fluorine), OCF₃, CF₃, NO₂ or CN, whatever the cationic entity.

3. Process according to the preceding claim, **characterized in that** the cationic entity of the cationic initiator is selected from onium salts of formula **(VI):**
[(R¹⁰)ₙ-A-(R¹¹)ₘ]⁺ **(VI)**
in which:
• A represents an element from Groups 15 to 17, such as, for example: I, S, Se, P or N,
• R¹⁰ represents a C₆-C₂₀ carbocyclic or heterocyclic aryl radical, it being possible for said heterocyclic radical to comprise nitrogen or sulfur as heteroelements,
• R¹¹ represents R¹⁰ or a linear or branched C₁-C₃₀ alkyl or alkenyl radical; said R¹⁰ and R¹¹ radicals optionally being substituted by a
- C₁-C₂₅ alkoxy, C₁-C₂₅ al-kyl, nitro, chloro, bromo, cyano, carboxyl, ester or mercapto group,
• n is an integer ranging from 1 to v + 1, v being the valency of the element A,
• m is an integer ranging from 0 to v - 1, with n + m = v + 1.

4. Process according to any one of the preceding claims, **characterized in that** the matrix **B** comprises at least one of the following organic species **B1**: (α₁) epoxides and noncycloaliphatic epoxides, (α₂) acrylates, (α₃) linear or cyclic alkenyl ethers, and (α₄) polyols.

5. Process according to the preceding claim, **characterized in that** the organic species **B1** are chosen from the following:
α1.1) cycloaliphatic epoxides, and in particular:
- epoxides of the 3,4-epoxycyclohexylmethyl
3',4'-epoxycyclohexanecarboxylate type: 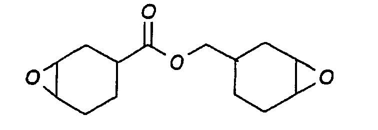
- or bis(3,4-epoxycyclohexyl) adipate;
α_{1.2}) noncycloaliphatic epoxides, and in particular:
• epoxides of the type of those resulting from the condensation of bisphenol ***A*** and of epichlorohydrin and of the type:
- di- and triglycidyl ethers of bisphenol ***A*** alkoxylated with 1,6-hexanediol, with glycerol, with neopentyl glycol and with trimethylolpropane,
- or diglycidyl ethers of bisphenol ***A*,**
• alpha-olefin epoxides, Novolac epoxides, epoxidized soybean oil, epoxidized linseed oil and epoxidized polybutadiene,
α₂) acrylates, and in particular:
• epoxidized acrylates, preferably the oligomer of bisphenol **A** epoxydiacrylate (Ebecryl 600),
• polyester glycerol acrylates, preferably a mixture of oligomer of acrylate which is trifunctional obtained from glycerol and polyester (Ebecryl 810),
• multifunctional acrylates, preferably pentaerythritol triacrylate (PETA), trimethylolpropane triacrylate (TMPTA), 1,6-hexanediol diacrylate (HDODA), trimethylolpropane ethoxylate triacrylate, thiodiethylene glycol diacrylate, tetraethylene glycol diacrylate (TTEGDA), tripropylene glycol diacrylate (TRPGDA), triethylene glycol diacrylate (TREGDA) or trimethylolpropane trimethacrylate (TMPTMA),
• urethane acrylates,
• polyether acrylates,
• polyester acrylates,
• unsaturated polyesters,
• acrylic acrylates,
α₃) linear or cyclic alkenyl ethers and in particular:
• vinyl ethers, in particular dodecyl vinyl ether (DDVE), cyclohexyl vinyl ether (CVE), butanediol divinyl ether (BDVE), butanediol monovinyl ether (HBVE), cyclohexanedimethanol divinyl ether (CHDVE), cyclohexanedimethanol monovinyl ether (CHMVE), triethylene glycol divinyl ether (DVE-3) and vinyl ethers of formulae: 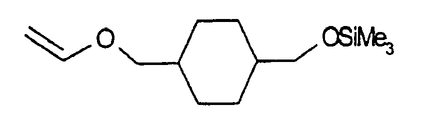 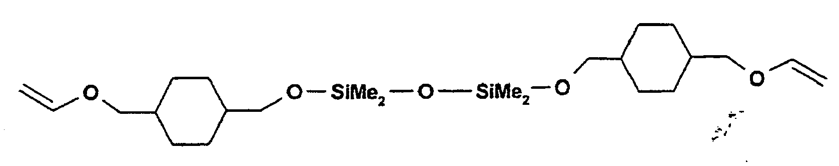
• propenyl ethers,
• and butenyl ethers;
α₄) polyols, and preferably the compound of formula:

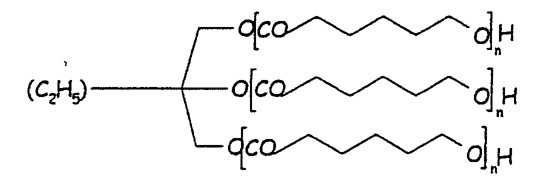

6. Process according to any one of the preceding claims, **characterized in that** the organic matrix **B** additionally comprises at least one monomer(s) and/or oligomer(s) and/or polymer(s) of polyorganosiloxane **B2** nature, which monomer(s) and/or oligomer(s) and/or polymer(s) are composed of units of formula (IV) and are terminated by units of formula (V) or are cyclic and are composed of units of formula (IV), which formulae are represented below: 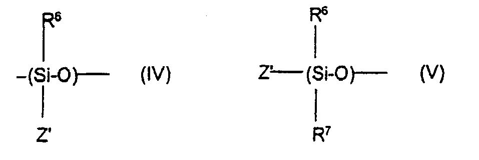 in which:
- the R⁶ and R⁷ symbols, which are alike or different, have definitions identical to those given for A4,
- the Z' symbols, which are alike or different, represent:
• an R⁶ and/or R⁷ group,
• a hydrogen radical,
• and/or a crosslinkable organofunctional group, preferably an epoxy functional, dioxolane functional and/or alkenyl ether functional group, connected at the silicon of the polyorganosiloxane via a divalent radical which comprises from 2 to 20 carbon atoms and which can comprise at least one heteroatom, preferably oxygen,
• with at least one of the Z' symbols representing a crosslinkable organic functional group.

7. Process according to the preceding claim, **characterized in that** the (**B**rf)s of the polyorganosiloxane **B** are chosen from the following radicals: 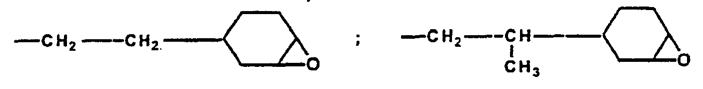 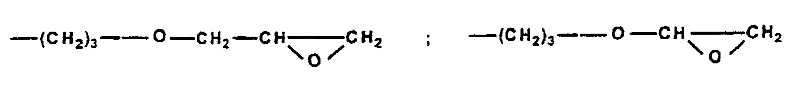 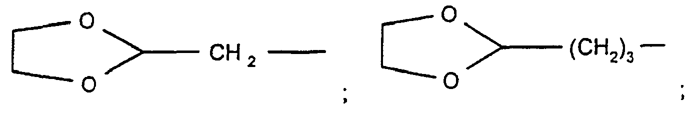 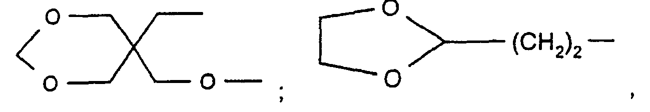 -(O)_{n'}-(CH₂)_{n"}-O-CH=CH₂, -(O)_{n'}-(CH₂)_{n"}-R⁸-O-CH=CH₂ and - (O)ₙ,-(CH₂)_{n''}-O-CH=CH-R⁹
in which:
• n' represents 0 or 1 and n" an integer between 1 and 5
• R⁸ represents:
- a linear, branched or cyclic C₁-C₁₂ alkylene radical which is optionally substituted,
- or a C₅-C₁₂ arylene radical, preferably a phenylene radical, which is optionally substituted, preferably by one to three C₁-C₆ alkyl groups,
• and R⁹ represents a linear or branched C₁-C₆ alkyl radical.

8. Treated plastic capable of being obtained by the process according to any one of the preceding claims.

9. Plastic according to the preceding claim, **characterized in that** the surface treatment is carried out for the purpose of forming a coating such as an ink, a nonstick coating, an adhesive coating or a varnish.

## Patentansprüche

1. Verfahren zur Oberflächenbehandlung von Kunststoffen, das folgende Schritte umfasst:
(1) auf mindestens eine der Flächen des Kunststoffs Aufbringen einer polymerisierbaren und/oder vernetzbaren Zusammensetzung mit reaktiven funktionellen Gruppen, die Folgendes umfasst:
• 1 bis 99 Gew.-% und vorzugsweise 1 bis 60 Gew.-% von mindestens einer polymerisierbaren und/oder zumindest teilweise polymerisierten organischen Matrix A, die (Co)monomere, (Co)oligomere und/oder (Co)polymere umfasst, die aus mindestens einer der folgenden Spezies zusammengesetzt sind:
A1) Monomere mit Oxetan- und Alkoxylgruppen, Oxetan- und Hydroxylgruppen oder Oxetan- und Alkoxylsilylgruppen mit der Formel: 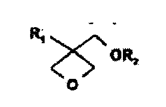 wobei:
- R₁ (i) ein Wasserstoffatom ist, (ii) ein linearer oder verzweigter Alkylrest ist, der 1 bis 30 Kohlenstoffatome umfasst, (iii) ein Arylrest ist, der 6 bis 30 Kohlenstoffatome umfasst und gegebenenfalls mit mindestens einem Fluoratom, einem Carboxylrest, einem Hydroxylrest, einem Esterrest oder einem Rest mit einer funktionellen Ketongruppe substituiert ist, (iv) ein Cycloalkylrest ist, der 5 bis 6 Kohlenstoffatome umfasst und gegebenenfalls mit mindestens einem Fluoratom, einem Hydroxylrest, einem Carboxylrest, einem Esterrest oder einem Rest mit einer funktionellen Ketongruppe substituiert ist, (v) ein Rest OR' ist, wobei R' ein linearer oder verzweigter Alkylrest ist, der 1 bis 30 Kohlenstoffatome umfasst, oder (vi) ein Alkenylrest ist, der 2 bis 12 Kohlenstoffatome umfasst,
- R₂ (i) ein Wasserstoffatom ist, (ii) ein Alkenylrest ist, der 2 bis 12 Kohlenstoffatome umfasst (beispielsweise ein Vinylrest, ein Propenylrest), (iii) ein linearer oder verzweigter Alkylrest ist, der 1 bis 30 Kohlenstoffatome umfasst und gegebenenfalls mit beispielsweise einer Oxirangruppe substituiert ist, (iv) ein Arylrest ist, der 6 bis 30 Kohlenstoffatome umfasst und gegebenenfalls mit mindestens einem Alkylrest, der 1 bis 30 Kohlenstoffatome umfasst, einem Benzylrest, einem CF₃-Rest, einem Halogenatom, einem Hydroxylrest, einem Carboxylrest, einem Alkoxyrest substituiert ist, (v) eine lineare oder verzweigte Silyl- oder Silyl-Alkyl-Gruppe-(CₙH₂ₙ)-SiR₃R₄R₅ ist, bei der n zwischen 0 und 12 liegt, und R₃, R₄ und R₅, die identisch oder unterschiedlich sind, ein Wasserstoffatom, einen Hydroxylrest, einen Alkoxyrest OR' darstellen, bei dem R' ein linearer oder verzweigter Alkylrest ist, der 1 bis 30 Kohlenstoffatome umfasst, (vi) ein linearer oder verzweigter Alkylrest ist, der 1 bis 30 Kohlenstoffatome umfasst, (vii) ein Arylrest ist, der 6 bis 30 Kohlenstoffatome umfasst, gegebenenfalls substituiert, (viii) ein Alkenylrest ist, der 2 bis 12 Kohlenstoffatome umfasst, (ix) ein Acrylatrest ist, (x) ein Methacrylatrest (beispielsweise -CO-CH=CH₂) oder (xi) ein Urethanrest -CO-NH-R₁ ist, bei dem R₁ genauso definiert ist, wie zuvor angegeben ist,
A2) Monomere mit Carboxyl- und Oxetangruppen oder mit Oxetan- und Alkoxysilylgruppen mit der Formel: 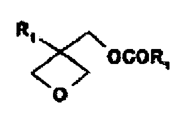 wobei:
- R₁ genauso definiert ist, wie es bei A1) angegeben ist,
- R₂ genauso definiert ist, wie es bei A1) angegeben ist,
A3) bifunktionelle Oxetanmonomere mit der Formel: 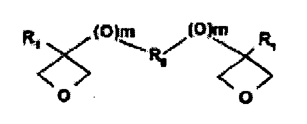 wobei:
- m, das identisch oder unterschiedlich ist, gleich 0 oder 1 ist,
- R₁ genauso definiert ist, wie es bei A1) angegeben ist
- R₆, ein zweiwertiger Rest, (i) ein linearer oder verzweigter Alkylrest ist, der 1 bis 30 Kohlenstoffatome umfasst, (ii) ein Arylrest ist, der 6 bis 30 Kohlenstoffatome umfasst und gegebenenfalls substituiert ist (mit mindestens einem Alkylrest, der 1 bis 30 Kohlenstoffatome umfasst), (iii) ein Arylrest ist, der 6 bis 30 Kohlenstoffatome umfasst (beispielsweise ein Benzylrest), (iv) ein Cycloalkylrest ist, der 5 bis 30 Kohlenstoffatome umfasst (Bsp.: Cyclohexyl), (v) ein Rest -CH₂-C₆H₁₀-CH₂- ist, (vi) ein Rest -CH₂-C₆H₄-CH₂- ist, (vii) ein Rest CF₃ ist, (viii) ein Halogenatom ist, (ix) ein Hydroxylrest ist, (x) ein Carboxylrest ist, (xi) ein Alkoxylrest OR' ist, bei dem R' genauso definiert ist, wie es bei A1) angegeben ist, (xii) eine Silylgruppe =SiR₃R₄ ist, bei der n zwischen 0 und 12 liegt und R₃, R₄, die identisch oder unterschiedlich sind, ein Wasserstoffatom, einen Hydroxylrest, einen Alkoxylrest OR', bei dem R' genauso definiert ist, wie es bei A1) angegeben ist, einen linearen oder verzweigten Alkylrest, der 1 bis 30 Kohlenstoffatome umfasst, einen Arylrest, der 6 bis 30 Kohlenstoffatome umfasst, gegebenenfalls substituiert, einen Rest -C₆H₄-C(CH₃)₂-C₆H₄- oder einen Alkenylrest darstellen, der 2 bis 12 Kohlenstoffatome umfasst,
• 99 bis 1 Gew.-% und vorzugsweise 99 bis 40 Gew.-% von mindestens einer polymerisierbaren und/oder zumindest teilweise polymerisierten organischen Matrix B, die (Co)monomere, (Co)oligomere und/oder (Co)polymere umfasst, die aus denen ausgewählt sind, die reaktive funktionelle Epoxid- (α₁) und/oder Acrylat- (α₂) und/oder Alkenyl-Ether- (α₃) und/oder Hydroxyl-(α₄)-Gruppen (frB) besitzen,
• eine wirksame Menge von mindestens einem kationischen oder kationischen und radikalischen Startersystem C,
• gegebenenfalls mindestens einen Sensibilisator D,
• und gegebenenfalls mindestens ein Pigment E,
(2) und Polymerisieren und/oder Vernetzen der behandelten Oberfläche, indem sie einer Strahlungsquelle und/oder einem Elektronenstrahl/Elektronenstrahlen ausgesetzt wird,
wobei die organische Matrix A darüber hinaus Polyorganosiloxane A4) umfasst, die aus Grundbausteinen mit der Formel (II) bestehen und mit Grundbausteinen der Formel (III) enden, und/oder cyclische Polyorganosiloxane, die aus Grundbausteinen mit der Formel (II) bestehen, die nachfolgend dargestellt sind: 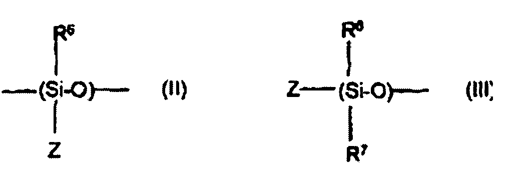 wobei:
- die Symbole R⁶ und R⁷, die ähnlich oder unterschiedlich sind, Folgendes darstellen:
einen linearen oder verzweigten Alkylrest, der 1 bis 8 Kohlenstoffatome enthält und gegebenenfalls mit mindestens einem Halogen, vorzugsweise Fluor, substituiert ist, wobei die Alkylreste vorzugsweise Methyl, Ethyl, Propyl, Octyl und 3,3,3-Trifluorpropyl sind,
· einen Cycloalkylrest, der zwischen 5 und 8 ringförmig angeordnete Kohlenstoffatome enthält, gegebenenfalls substituiert,
einen Arylrest, der zwischen 6 und 12 Kohlenstoffatome enthält und substituiert sein kann, vorzugsweise Phenyl oder Dichlorphenyl,
einen Aralkylbestandteil mit einem Alkylbestandteil, der zwischen 5 und 14 Kohlenstoffatome enthält, und einem Arylbestandteil, der zwischen 6 und 12 Kohlenstoffatome enthält, an dem Arylbestandteil gegebenenfalls mit Halogenen, Alkylen und/oder Alkoxylen substituiert, die 1 bis 3 Kohlenstoffatome enthalten,
- die Symbole Z, die ähnlich oder unterschiedlich sind, Folgendes darstellen:
· eine Gruppe R⁶ und/oder R⁷,
· einen Wasserstoffrest,
· und/oder eine vernetzbare oxetanfunktionelle Gruppe, die mit dem Silicium des Polyorganosiloxans über einen zweiwertigen Rest verbunden ist, der 2 bis 20 Kohlenstoffatome enthält und mindestens ein Heteroatom, vorzugsweise Sauerstoff, enthalten kann, wobei dieses unmittelbar unter Bildung einer Bindung =Si-OC= mit dem Silicium verbunden sein kann,
· wobei mindestens eins der Symbole Z eine vernetzbare funktionelle Oxetangruppe darstellt.

2. Verfahren nach Anspruch 1, **dadurch gekennzeichnet, dass** der Starter C ein kationischer Starter ist, dessen anionisches Objekt folgende Formel (X) besitzt:
[BX"ₐ R¹²_{b}] (X)
wobei:
- a und b ganze Zahlen sind, die für a von 0 bis 3 gehen und für b von 1 bis 4 mit a + b = 4,
- die Symbole X" Folgendes darstellen:
* ein Halogenatom (Chlor, Fluor) mit a = 0 bis 3,
* eine OH-Gruppe mit a = 0 bis 2,
- die Symbole R¹², die identisch oder unterschiedlich sind, Folgendes darstellen:
• einen Phenylrest, der mit mindestens einer Elektronen anziehenden Gruppe wie beispielsweise OCF₃, CF₃, NO₂ CN und/oder mit mindestens 2 Halogenatomen (insbesondere Fluor) substituiert ist, wenn das kationische Objekt eine Oniumverbindung von einem Element der Gruppen 15 bis 17 ist,
• einen Phenylrest, der mit mindestens einem Elektronen anziehenden Element oder einer Elektronen anziehenden Gruppe, besonders einem Halogenatom (insbesondere Fluor), CF₃, OCF₃, NO₂, CN substituiert ist, wenn das kationische Objekt ein metallorganischer Komplex von einem Element der Gruppen 4 bis 10 ist,
• einen Arylrest, der mindestens zwei aromatische Ringe enthält wie beispielsweise Biphenyl, Naphthyl, gegebenenfalls substituiert mit mindestens einem Elektronen anziehenden Element oder einer Elektronen anziehenden Gruppe, besonders einem Halogenatom (insbesondere Fluor), OCF₃, CF₃, NO₂, CN, unabhängig von der Art des kationischen Objekts.

3. Verfahren nach dem vorhergehenden Anspruch, **dadurch gekennzeichnet, dass** das kationische Objekt des kationischen Starters unter den Oniumsalzen mit der Formel (VI) ausgewählt ist:
[(R¹⁰)ₙ - A - (R¹¹)ₘ]⁺ (VI)
wobei:
• A ein Element der Gruppen 15 bis 17 wie zum Beispiel: I, S, Se, P oder N ist,
• R¹⁰ einen carbocyclischen oder heterocyclischen Arylrest mit C₆ bis C₂₀ darstellt, wobei der heterocyclische Rest als Heteroelemente Stickstoff oder Schwefel enthalten kann,
• R¹¹ R¹⁰ oder einen linearen oder verzweigten Alkyl- oder Alkenylrest mit C₁ bis C₃₀ darstellt, wobei die Reste R¹⁰ und R¹¹ gegebenenfalls mit einer Alkoxylgruppe mit C₁ bis C₂₅, Alkylgruppe mit C₁ bis C₂₅, Nitro-, Chlor-, Brom-, Cyano-, Carboxyl-, Ester- oder Mercaptogruppe substituiert sind,
• n eine ganze Zahl ist, die von 1 bis v + 1 geht, wobei v die Valenz des Elements A ist,
• m eine ganze Zahl ist, die von 0 bis v - 1 geht, mit n + m = v + 1.

4. Verfahren nach einem der vorhergehenden Ansprüche, **dadurch gekennzeichnet, dass** die Matrix B mindestens eine der folgenden organischen Spezies B1 umfasst: (α₁) Epoxide und nicht cycloaliphatische Epoxide, (α₂) Acrylate, (α₃) lineare oder cyclische Alkenylether und (α4) Polyole.

5. Verfahren nach dem vorhergehenden Anspruch, **dadurch gekennzeichnet, dass** die organischen Spezies B1 aus den folgenden ausgewählt sind:
α_{1.1}) cycloaliphatische Epoxide und insbesondere:
- Epoxide der Art 3,4-Epoxycyclohexylmethyl-3',4'-epoxycyclohexancarboxylat: 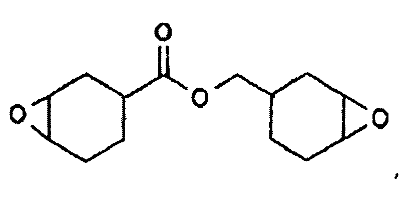
- oder Bis(3,4-epoxycyclohexyl)adipat,
α_{1.2}) nicht alicyclische Epoxide und insbesondere:
• Epoxide der Art, die aus der Kondensation von Bisphenol A und Epichlorhydrin entstehen und von folgender Art:
- Di- und Triglycidylether von Bisphenol A, alkoxyliert mit 1,6-Hexandiol, Glycerin, Neopentylglykol und Trimethylolpropan,
- oder Diglycidylether von Bisphenol A,
• Epoxide aus Alphaolefinen, NOVOLAC-Epoxide, epoxidiertes Sojaöl, epoxidiertes Leinöl und epoxidiertes Polybutadien,
α₂) Acrylate und insbesondere:
• epoxidierte Acrylate, vorzugsweise das Oligomer von Bisphenol-A-Epoxydiacrylat (EBECRYL 600),
• Glycerin-Polyesteracrylate, vorzugsweise ein Gemisch aus einem trifunktionellen Acrylatoligomer, gewonnen aus Glycerin und Polyester (EBECRYL 810),
• multifunktionelle Acrylate, vorzugsweise Pentaerythritoltriacrylat (PETA), Trimethylolpropantriacrylat (TMPTA), 1,6-Hexandioldiacrylat (HDODA), Trimethylolpropan-ethoxylat-triacrylat, Thiodiethylenglykol-diacrylat, Tetraethylenglykoldiacrylat (TTEGDA), Tripropylenglykoldiacrylat (TRPGDA), Triethylenglykoldiacrylat (TREGDA), Trimethylolpropantrimethacrylat (TMPTMA),
• Urethanacrylate,
• Polyetheracrylate,
• Polyesteracrylate,
• ungesättigte Polyester,
• Acrylacrylate,
α₃) lineare oder cyclische Alkenylether und insbesondere:
• Vinylether, insbesondere Dodecylvinylether (DDVE), Cyclohexylvinylether (CVE), Butandioldivinylether (BDVE), Butandiolmonovinylether (HBVE), Cyclohexandimethanoldivinylether (CHDVE), Cyclohexandimethanolmonovinylether (CHMVE), Triethylenglykoldivinylether (DVE-3) und Vinylether mit der Formel: 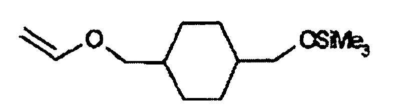 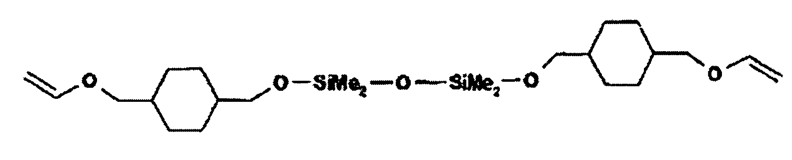
• Propenylether,
• und Butenylether,
α₄) Polyole und vorzugsweise die Verbindung mit der Formel:

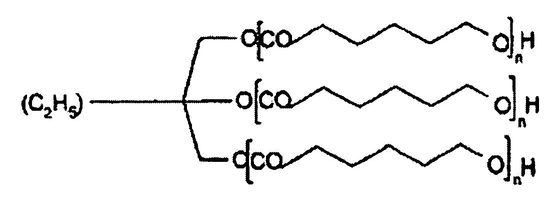

6. Verfahren nach einem der vorhergehenden Ansprüche, **dadurch gekennzeichnet, dass** die organische Matrix B darüber hinaus mindestens ein Monomer/Monomere und/oder ein Oligomer/Oligomere und/oder ein Polymer/Polymere vom Typ Polyorganosiloxan B2 umfasst, die aus Grundbausteinen mit der Formel (IV) bestehen und mit Grundbausteinen der Formel (V) enden, oder cyclisch sind und aus Grundbausteinen mit der Formel (IV) bestehen, die nachfolgend dargestellt sind: 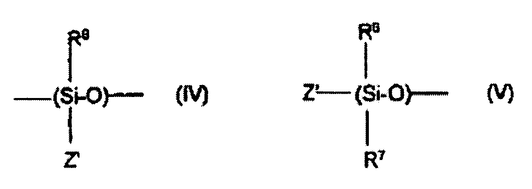 wobei:
- die Symbole R⁶ und R⁷, die ähnlich oder unterschiedlich sind, genauso definiert sind, wie es bei A4 angegeben ist,
- die Symbole Z', die ähnlich oder unterschiedlich sind, Folgendes darstellen:
· eine Gruppe R⁶ und/oder R⁷,
· einen Wasserstoffrest,
· und/oder eine vernetzbare organofunktionelle Gruppe, vorzugsweise eine epoxyfunktionelle, dioxolanfunktionelle und/oder alkenyletherfunktionelle Gruppe, die mit dem Silicium des Polyorganosiloxans über einen zweiwertigen Rest verbunden ist, der 2 bis 20 Kohlenstoffatome enthält und mindestens ein Heteroatom, vorzugsweise Sauerstoff, enthalten kann,
· wobei mindestens eines der Symbole Z' eine vernetzbare organische funktionelle Gruppe darstellt.

7. Verfahren nach dem vorhergehenden Anspruch, **dadurch gekennzeichnet, dass** die (frB) des Polyorganosiloxans B aus den folgenden Resten ausgewählt werden: 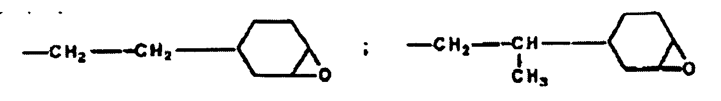 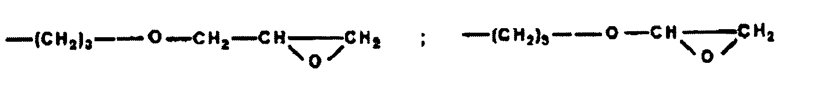 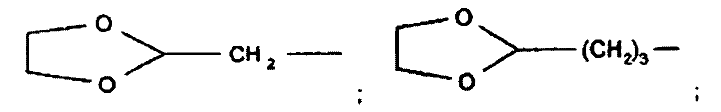 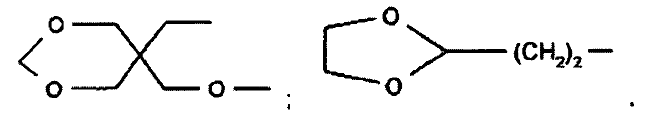 -(O)_{n'}-(CH₂)_{n"}-O-CH=CH₂, -(O)_{n'}-(CH₂)_{n"}-R⁸-O-CH-CH₂, und -(O)_{n'}-(CH₂)_{n"}-O-CH=CH-R⁹
wobei:
• n' 0 oder 1 ist und n" eine ganze Zahl zwischen 1 und 5,
• R⁸ Folgendes darstellt:
- einen linearen, verzweigten oder cyclischen Alkylenrest mit C₁ bis C₁₂, gegebenenfalls substituiert,
- oder einen Arylenrest mit C₅ bis C₁₂, vorzugsweise Phenylen, der gegebenenfalls, vorzugsweise mit einer bis drei Alkylgruppen mit C₁ bis C₆, substituiert ist,
• und R⁹ einen linearen oder verzweigten Alkylrest mit C₁ bis C₆ darstellt.

8. Behandelter Kunststoff, der mit dem Verfahren nach einem der vorhergehenden Ansprüche erhalten werden kann.

9. Kunststoff nach dem vorhergehenden Anspruch, **dadurch gekennzeichnet, dass** die Oberflächenbehandlung mit dem Ziel der Bildung eines Überzugs wie einer Druckfarbe, einer Antihaftbeschichtung, einer haftenden Beschichtung oder eines Lacks durchgeführt wird.
